(19) Europäisches Patentamt
European Patent Office
Office européen des brevets

(11) EP 4 209 496 A1

(12) EUROPEAN PATENT APPLICATION

(43) Date of publication:
12.07.2023 Bulletin 2023/28

(21) Application number: 22305009.7

(22) Date of filing: 06.01.2022

(51) International Patent Classification (IPC):
C07F 5/02 (2006.01) C09B 45/00 (2006.01)
C09B 47/00 (2006.01) C09K 11/06 (2006.01)

(52) Cooperative Patent Classification (CPC):
C07F 5/022; C09B 23/04; C09B 23/12; C09K 11/06

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicants:
- Université de Strasbourg
67000 Strasbourg (FR)
- Centre national de la recherche scientifique
75016 Paris (FR)
- Ecole Normale Supérieure de Lyon
69007 Lyon (FR)
- UNIVERSITE CLAUDE BERNARD - LYON 1
69100 Villeurbanne (FR)

(72) Inventors:
- CEUGNIET, Fabien
73410 SAINT-OURS (FR)
- ULRICH, Gilles
67460 SOUFFELWEYERSHEIM (FR)
- LECLERC, Nicolas
67380 LINGOLSHEIM (FR)
- MAURY, Olivier
13001 MARSEILLE (FR)

(74) Representative: IPAZ
Bâtiment Platon
Parc Les Algorithmes
91190 Saint-Aubin (FR)

# (54) NOVEL FLUORESCENT BODIPY COMPOUNDS DISPLAYING ABSORPTION AND EMISSION IN THE NIR REGION

(57) The present invention relates to novel bodipy compounds comprising the combination of carbazole moieties and five membered aromatic ring-based heteroaryl moieties, and more particularly the combination of carbazole moieties and thiophene-based heteroaryl moities, said bodipy compounds displaying absorption and emission in the NIR region, to a method for preparing said bodipy compounds, and to the use of said BODIPY compounds as fluorescent dyes in various applications.

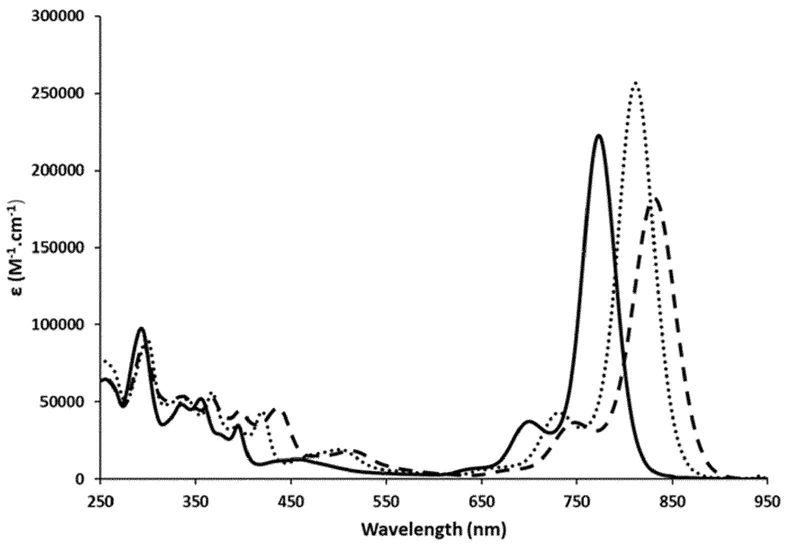


FIG. 1



Processed by Luminess, 75001 PARIS (FR)

## Description

The present invention relates to novel bodipy compounds comprising the combination of carbazole moieties and five membered aromatic ring-based heteroaryl moieties, and more particularly the combination of carbazole moieties and thiophene-based heteroaryl moities, said bodipy compounds displaying absorption and emission in the NIR region, to a method for preparing said bodipy compounds, and to the use of said BODIPY compounds as fluorescent dyes in various applications.

The invention deals more particularly, but not exclusively, with the introduction of of appropriate substituents at the 3,5 and 2,6 positions of the bodipy ring (αβ-fused scaffolds).

Organics dyes with near-infrared (NIR) absorption and emission (i.e. which absorb and emit light in the near-infrared region) have received a significant attention due to their numerous potential applications. For instance, dye-sensitized and bulk heterojunction solar cells, red-emitting lasers, and bio-imaging are three areas with an intensive demand for organic dyes presenting optical properties in the NIR range.

Research has been focused on NIR fluorescent dyes including cyanine dyes, squaraine, phthalocyanines, and porphyrin derivatives. Up to now, the most common NIR fluorophores belong to cyanine dyes such as Cy7. However, they fluorescence tend to be weak and present low quantum yields. 4,4-difluoro-4-bora-3a,4a-diaza-s-indacene (BODIPY) derivatives, also known as boron dipyrromethene, have also been widely studied over the past two decades due to their outstanding characteristics, such as high molar absorption coefficients, intense fluorescence quantum yields, high stability, and tunable spectroscopic and photophysical properties. However, the relatively short wavelength of excitation and emission maxima (generally within 500-600 nm) and moderate extinction coefficients (around 80,000 $M^{-1}.cm^{-1}.L$) limit the application of BODIPY chromophores.

Various strategies have been employed to promote the absorption and emission wavelengths of BODIPY dyes to the far-red and NIR regions. Some examples include the extension of n-conjugation length, rigidification of rotatable moieties, the introduction of a nitrogen atom in the meso-position to form aza-BODIPY dyes, and the formation of a "push-pull" motif (i.e. incorporation of both electron-donating and electron-withdrawing unit in the same conjugated material).

Fused boron dipyrromethenes, a n-extended subclass of BODIPYs, has gained increased interest over the past decade because of their excellent optoelectronics properties in the NIR region. In addition to the traditional properties of BODIPY dyes such as high molar absorption coefficient, large fluorescence quantum yield, and good photostability, fused BODIPYs display strongly redshifted absorption and emission due to the extension of their n-system. In the literature, three fused BODIPY skeleton can be identified: meso-fused, ββ-fused or αβ-fused depending of the position of the fused-rings with respect to the boron dipyrromethene core. The Scheme 1 below illustrates the general nomenclature of boron dipyrromethenes compounds (a), and the three types of fused boron dipyrromethenes compounds (b).

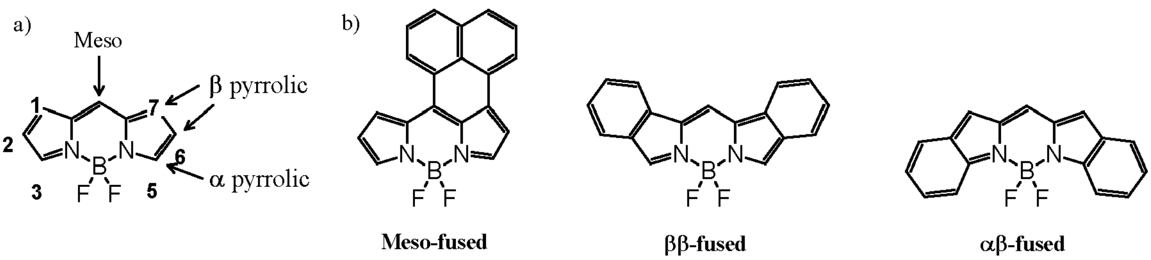

a) b)

Meso-fused ββ-fused αβ-fused

**SCHEME 1**

The labels α and β indicate the position of the aromatic fused unit on the BODIPY central core.

BODIPYs with different αβ-fused units, namely a furan, a thiophene, or a thioenothiophene at the α,β pyrrolic positions have been described. For example, Awuah et al. [Organic Letters, 2011, 13, 15, 3884-3887] describes NIR bodipy dyes having the following structures :

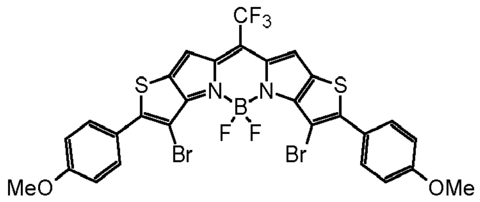

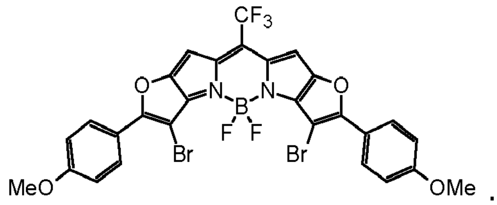

## SCHEME 2

These compounds including the ones bearing a bromide atom at the 1- and 7-position of the furan or of the thiophene absorb (720-766 nm) and emit (738-820 nm) in the NIR region of the electromagnetic spectrum. However, such n-extended pyrrole derivatives are prepared through prefunctionnalization of the pyrrole unit before the formation of the BODIPY core which can be cumbersome and limits the variety of available fused backbone.

Other fused moieties like naphthalene, indoles, or benzofuran were prepared by another synthetic pathway based on post-functionalization involving an aromatic cyclisation step after the formation of the BODIPY core. The post-functionalization is more convenient since it enables to provide a wide variety of fused BODIPY from a single initial BODIPY core. Several methods of cyclisation were employed depending on the type of $\alpha\beta$-fused units to be obtained. More particularly, Hayashi et al. [Organic Letters, 2012, 14, 3, 866-869] describes a Suzuki-Miyaura reaction between a biaryl boronic acid and a 2,6-dibromo-BODIPY followed by an intramolecular oxidative cyclisation with bis(trifluoroacetoxy)iodo]-benzene (PIFA) and $BF_3.OEt_2$ to afford biphenyl-fused BODIPY (see Scheme 3 below, Ar = 2,4,6-trimethylphenyl).

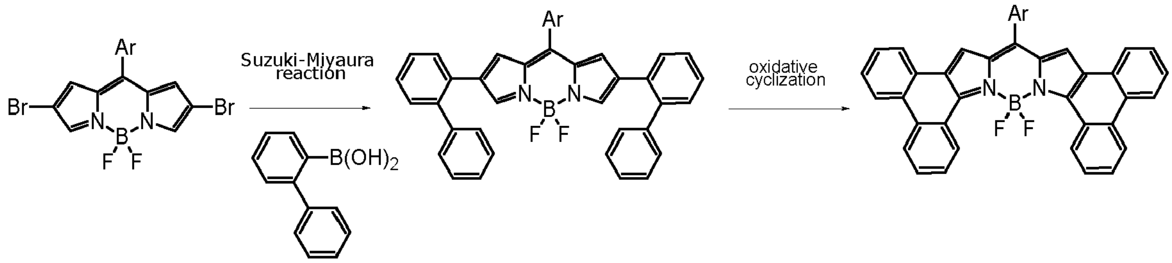


## SCHEME 3

The main disadvantage of this method is the complexity of the biaryl boronic acid synthesis which prevents the access to a wide variety of compounds. Additionally, the biphenyl-fused BODIPY compound obtained shows relatively short wavelength of excitation and emission maxima (673-692 nm.

Other $\alpha\beta$-fused BODIPY compounds have been described by Huaulmé et al. [Journal of Materials Chemistry C, 2018, 6, 9925-9931] involving stille coupling reactions to introduce different substituents at positions 2 and 6, and at positions 3 and 5, and an oxidative cyclisation with iron (III) chloride $FeCl_3$. This pathway involves regioselective tetra-functionalization of the 2, 3, 5 and 6 positions and leads to four heterosubstituted fused BODIPYs isomers having an intense absorption (with extinction coefficients up to 230 000 $M^{-1}.cm^{-1}$) in the UV-visible range but with really dissimilar absorption profiles and with absorption onsets ranging from 720 to 800 nm. The different isomers are non or weakly fluorescent.

Thus, the aim of the present invention is to overcome the drawbacks of the cited prior art, and more particularly, to provide new fluorescent compounds with high brightness, high molar absorption coefficient in the NIR region, large fluorescence quantum yield, and good photostability. Another aim of the present invention is to provide a simple synthetic method for the preparation of such fluorescent compounds, said method enabling preparation of a wide variety of fluorescent compounds with tunable physico-chemical properties.

The bodipy compounds

A first object of the present invention is $\alpha\beta$-fused BODIPY compound responding to the following formula (I) or (I'):

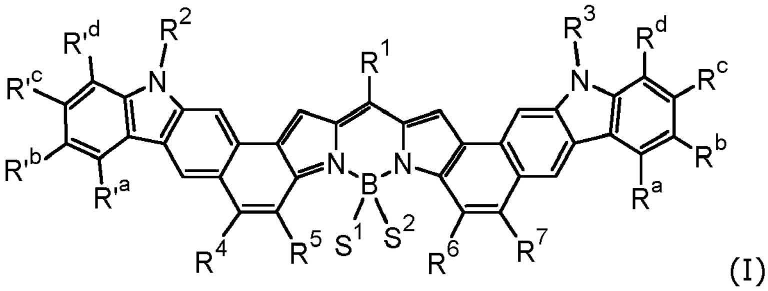

(I)

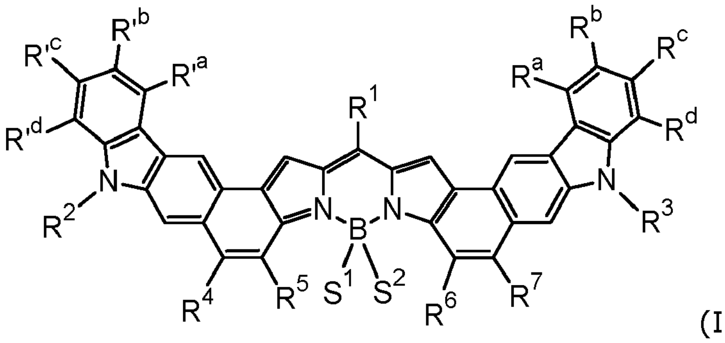

(I′)

in which:

* $S^1$ and $S^2$, which may be identical or different, represent:

- a fluorine atom,
- a group with a formula (II): $-(L)_m-G$, where:
  - m is an integer equal to 0 (absence of the linker arm L) or 1 (presence of the linker arm L),
  - L is selected from an alkylene group optionally interrupted by one or more oxygen atoms, an alkynylene group optionally interrupted by one or more oxygen atoms, an arylene group, and an heteroarylene group, and
  - G is an hydrogen atom, an alkyl group, or a functional group,
- a group with a formula (III): $-C{\equiv}C-(L')_{m'}-A$, where:
  - m' is an integer equal to 0 (absence of the linker arm L') or 1 (presence of the linker arm L'),
  - L' is selected from an alkylene group optionally interrupted by one or more oxygen atoms , an alkynylene group optionally interrupted by one or more oxygen atoms, an arylene group, and an heteroarylene group, and
  - A is an hydrogen atom, an alkyl group, a chromophore group, or a functional group, or
- a group with a formula (IV): -O-L"-G, where:
  - L" is selected from an alkylene group optionally interrupted by one or more oxygen atoms, or an arylene group, and
  - G is as defined above,

* $R^1$ represents:

- a hydrogen atom,

- a group with a formula (V): $-(T)_u-D$, where:

  - u is an integer equal to 0 (absence of the linker arm T) or 1 (presence of the linker arm T),

  - T is selected from an alkylene group optionally interrupted by one or more oxygen atoms, an alkynylene group optionally interrupted by one or more oxygen atoms, an arylene group, and an heteroarylene group, and

  - D is an hydrogen atom, an alkyl group, a functional group, a group of formula (VI) $-C{\equiv}C-(T')_{u'}-E$, or a group of formula (VII) -O-T"-D', where:

    ◦ u' is an integer equal to 0 (absence of the linker arm T') or 1 (presence of the linker arm T'),

    ◦ T' is selected from an alkylene group optionally interrupted by one or more oxygen atoms, an alkynylene group optionally interrupted by one or more oxygen atoms, an arylene group, and an heteroarylene group,

    ◦ E is an hydrogen atom, an alkyl group, a chromophore group, or a functional group,

    ◦ T" is selected from an alkylene group optionally interrupted by one or more oxygen atoms, or an arylene group, and

    ◦ D' is an hydrogen atom, an alkyl group, or a functional group,

* $R^2$ and $R^3$, which may be identical or different, represent an alkyl group optionally interrupted by one or more oxygen atoms, or an alkoxy group,

* $R^a$, $R^b$, $R^c$, $R^d$, $R'^a$, $R'^b$, $R'^c$, and $R'^d$, which may be identical or different, represent a hydrogen atom, an alkyl group optionally interrupted by one or more oxygen atoms, or an alkoxy group,

* $R^4$ and $R^5$, taken together, form a five membered aromatic ring-based heteroaryl group selected from a thiophene ring, a thienothiophene ring, an oligothiophene group such as a bithiophene group, a benzothiophene group, a furan ring, a benzofurane group, a pyrolle ring, and an indole group, and

* $R^6$ and $R^7$, taken together, form a five membered aromatic ring-based heteroaryl group selected from a thiophene ring, a thienothiophene ring, an oligothiophene group such as a bithiophene group, a benzothiophene group, a furan ring, a benzofurane group, a pyrolle ring, and an indole group.

Thanks to the combination of carbazole moieties or sub-units and five membered aromatic ring-based heteroaryl moieties or sub-units, the $\alpha\beta$-fused BODIPY compounds (I) and (I') of the present invention display high brightness, high chemical stability and photostability, high molar absorption coefficient in the NIR region (> 200000 $M^{-1}.cm^{-1}$ in the 750-900 nm range), large fluorescence quantum yield (> 10% and preferably up to 50% in the 800-1000 nm range), and also absorbs in the UV region with poor or no absorption in the visible region.

In the present invention, the near-infrared (NIR) region is defined as the region where the wavelength ranges from about 750 nm to about 1500 nm, and preferably from 750 nm to 1000 nm.

In the present invention, the term "fluorescent compound" or "fluorophore" is a compound containing a functional group capable of absorbing light energy at one wavelength (known as the excitation or absorption wavelength) and of releasing all or part of the absorbed energy by emission of light at a wavelength (known as the emission wavelength) greater than or equal to the absorption wavelength. This definition is well-known for a person skilled in the art.

In the present invention, the term "alkyl group" means a branched or linear (straight-chain) alkyl group. The alkyl group is preferably a $C_1$-$C_{20}$ alkyl group, more preferably a $C_1$-$C_{10}$ alkyl group, and even more preferably a $C_1$-$C_6$ alkyl group.

In the present invention, the term "alkoxy group" (i.e. -O-alkyl group) means a branched or linear (straight-chain) alkoxy group. The alkoxy group is preferably a $C_1$-$C_{20}$ alkoxy group (i.e. -O-$C_1$-$C_{20}$ alkyl group), more preferably a $C_1$-$C_{10}$ alkoxy group (i.e. -O-$C_1$-$C_{10}$ alkyl group), and even more preferably a $C_1$-$C_6$ alkoxy group (i.e. -O-$C_1$-$C_6$ alkyl group).

**Definition of $S^1$ and $S^2$**

Definition of L, L' and L"

An alkylene group can be a branched or linear alkylene group. The alkylene group is preferably a $C_1$-$C_{10}$ alkylene group, and more preferably a $C_1$-$C_6$ alkylene group.

The one or more oxygen atoms interrupting the alkylene group are not terminal oxygen atoms in the alkylene group.

The one or more oxygen atoms in the alkylene group preferably form(s) ether groups.

When the alkylene group is interrupted with one or more oxygen atoms, the alkylene group is preferably an ether group comprising from 1 to 12 oxygen atoms, and more preferably comprising from 1 to 6 oxygen atoms.

As an example, the alkylene group interrupted with one or more oxygen atom can be a polyether group such as a poly(ethylene oxide) or a poly(propylene oxide) group comprising from 2 to 12 oxygen atoms.

An alkynylene group can be a branched or linear (straight-chain) alkynylene group. The alkynylene group is preferably a $C_2$-$C_6$ alkynylene group, and more preferably a $C_2$-$C_4$ alkynylene group.

The one or more oxygen atoms interrupting the alkynylene group are not terminal oxygen atoms in the alkynylene group.

The one or more oxygen atoms in the alkynylene group preferably form(s) ether groups.

When the alkynylene group is interrupted with one or more oxygen atoms, the alkynylene group is preferably an ether group comprising from 1 to 6 oxygen atoms, and more preferably comprising from 1 to 3 oxygen atoms.

An arylene group or heteroarylene group preferably comprises one or more fused or non fused rings.

The arylene group is preferably a $C_5$-$C_{20}$ arylene group, and more preferably a $C_6$-$C_{18}$ arylene group.

The heteroarylene group is preferably a $C_5$-$C_{20}$ heteroarylene group, and more preferably a $C_6$-$C_{18}$ heteroarylene group.

The arylene group is preferably a phenylene group.

The arylene group can be substituted with one or more W groups (W being different from the G and A groups) selected from a halogen atom (preferably I or Br), an alkyl group, and an alkoxy group.

The heteroarylene group can be a thiophene, a furan, a polythiophene, a pyrrole, a pyridine, or a pyrimidine group.

The heteroarylene can be substituted with one or more W' groups (W' being different from the G and A groups) selected from a halogen atom (preferably I or Br), an alkyl group, and an alkoxy group.

L is preferably selected from an alkylene group optionally interrupted by one or more oxygen atoms, and an arylene group, and more preferably selected from an alkylene group optionally interrupted by one or more oxygen atoms, and a phenylene group.

L' is preferably selected from an alkylene group optionally interrupted by one or more oxygen atoms, and an arylene group.

In one particularly preferred embodiment, L' is an alkylene group interrupted by one or more oxygen atoms, such as a $-CH_2-O-CH_2-CH_2-O-CH_2-$group. In this embodiment, A is preferably an hydrogen atom.

In one particularly preferred embodiment, L" is an alkylene group. In this embodiment, G is preferably an hydrogen atom.

Definition of a chromophore group (as a group A in formule (III))

The chromophore group can be selected from:

- aryl groups comprising an aromatic ring optionally substituted, such as p-toluyl, styrenyl, pyridinyl, oligopyridinyl (bipyridinyle, terpyridinyle), thienyl, or pyrrolyl group,

- aryl groups comprising at least two fused aromatic rings, such as naphtyl, pyrenyl, anthracenyl, phenanthrenyl, quinolyl, phenanthronyl, perylenyl, fluorenyl, carbazolyl or acridinyle group, said fused aromatic rings being optionally substituted with at least one substituant selected from sulfonato, amino, nitro, hydroxy, ether and halogeno groups,

- coloring groups such as coumarinyl, hydroxycoumarinyl, alkoxycoumarinyl, trisulfonatopyrenyl, cyanine, styrylpyridinium, naphtalimidinyl or phenylphenanthridium group.

Definition of a functional group (as a group A in formule (III) and/or a group G in formulae (II) and (IV))

The functional group can be selected from:

- functional groups capable of reacting with an organic or inorganic compound to be labelled or detected in a medium to form a covalent, ionic, or hydrogen bond with said organic or inorganic compound to be labelled or detected,
- polar groups that can increase the solubility of the compound (I) or (I') in water such as a phosphate group, a sulfonate group, a sulfate group, a quaternaty ammonium group, an hydroxyl group, a phosphonate group, a poly(ethylene oxide) group, a poly(propylene oxide) group, a sugar, or a natural polysaccharide,
- functional groups capable of binding to a biological molecule to form a target molecule that can detect and quantify a given compound in a medium (such as binding to an antibody that can detect an antigen), and
- functional groups capable of binding to a polymer organic molecule.

The term "sugar" as a polar group refers to the compounds glucose, fructose, galactose, mannose, sucrose, lactose, maltose and sorbitol.
The term "natural oligosaccharide" as a polar group is taken to mean polysaccharides of plant origin, such as cellulose, starch, agarose, alginate and inulin, and polysaccharides of animal origin, such as hyaluronic acid and chitin.
A functional group capable of binding to a biological molecule as a group A (respectively as a group G) can be selected from the following groups: succinimidyl ester, sulfosuccinimidyl ester isothiocyanate, isocyanate, iodoacetamide, maleimide, sulfonyl halide, phosphoramidite, $C_2$-$C_5$ alkylimidate, $C_6$-$C_{10}$ arylimidate, acid halide, preferably acid chloride and acid bromide, hydrazine substituted with a $C_1$-$C_4$ alkyl, hydroxylamine substituted with a $C_1$-$C_4$ alkyl, carbodiimide, perfluorophenol, and a group -C(O)-Z, where Z is selected from an -OH, -O-succinimide, -maleimide, -N-glycine, -N-lysine, - Y-$(L)_m$-$NH_2$, -Y-$(L)_m$-COOH and -Y-$(L)_m$-SH group, where Y is selected from N and O atoms, and m and L are as defined in the present invention.
The biological molecule can be a protein, a nucleotide or an antibody.
The functional group capable of binding to a polymer organic molecule can be selected from trialkylsilyl, methacrylate, vinyl, styryl, anilino, pyrrolyl, thiophenyl, furyl, isocyanato, and epoxyde groups.
The polymer organic molecule is preferably polystyrene, polyacrylate, polymethacrylate, polyamide, polyurethane, polyepoxide, poly(ethylene oxide), poly (vinyl chloride), a natural polymer such as cellulose, latex or natural textile fiber.
The functional groups capable of reacting with an organic or inorganic compound to be detected in a medium to form a covalent, ionic, or hydrogen bond with said organic or inorganic compound can be selected from amino, ureido, hydroxyl, thiol, thioether, sulfhydryl, siloxane, carboxyl, carbonyl, and crown ether group.
The inorganic compound can be silica, alumina, zeolite, metal, silicon, or titanium oxide.
In one preferred embodiment, formula (II) for $S^1$ and/or $S^2$ is such that:

- m = 1,
- L represents an alkylene group interrupted by one or more oxygen atoms such as 3 oxygen atoms, and
- G represents an hydrogen atom.

In one preferred embodiment, formula (III) for $S^1$ and/or $S^2$ is such that:

- m' = 1,
- L' represents an alkylene group interrupted by one or more oxygen atoms such as 3 oxygen atoms, and
- A represents an hygrogen atom or a methyl group.

In one preferred embodiment, formula (IV) for $S^1$ and/or $S^2$ is such that:

- L" represents an alkylene group, and
- G represents an hygrogen atom or a dimethylamine group.

In one particular preferred embodiment, $S^1$ and $S^2$ are identical, and in a more preferred embodiment, $S^1$ and $S^2$ are fluorine atoms.

**Definition of R[1]**

Definition of T, T' and T"

An alkylene group can be a branched or linear alkylene group. The alkylene group is preferably a $C_1$-$C_{10}$ alkylene group, and more preferably a $C_1$-$C_6$ alkylene group.

The one or more oxygen atoms interrupting the alkylene group are not terminal oxygen atoms in the alkylene group.

The one or more oxygen atoms in the alkylene group preferably form(s) ether groups.

When the alkylene group is interrupted with one or more oxygen atoms, the alkylene group is preferably an ether group comprising from 1 to 12 oxygen atoms, and more preferably comprising from 1 to 6 oxygen atoms.

As an example, the alkylene group interrupted with one or more oxygen atom can be a polyether group such as a poly(ethylene oxide) or a poly(propylene oxide) group comprising from 2 to 12 oxygen atoms.

An alkynylene group can be a branched or linear (straight-chain) alkynylene group. The alkynylene group is preferably a $C_2$-$C_6$ alkynylene group, and more preferably a $C_2$-$C_4$ alkynylene group.

The one or more oxygen atoms interrupting the alkynylene group are not terminal oxygen atoms in the alkynylene group.

The one or more oxygen atoms in the alkynylene group preferably form(s) ether groups.

When the alkynylene group is interrupted with one or more oxygen atoms, the alkynylene group is preferably an ether group comprising from 1 to 6 oxygen atoms, and more preferably comprising from 1 to 3 oxygen atoms.

An arylene group or heteroarylene group preferably comprises one or more fused or non fused rings.

The arylene group is preferably a $C_5$-$C_{20}$ arylene group, and more preferably a $C_6$-$C_{18}$ arylene group.

The heteroarylene group is preferably a $C_5$-$C_{20}$ heteroarylene group, and more preferably a $C_6$-$C_{18}$ heteroarylene group.

The arylene group is preferably a phenylene group.

The arylene group can be substituted with one or more W groups (W being different from the D, D' and E groups) selected from a halogen atom (preferably I or Br), an alkyl group, and an alkoxy group.

The heteroarylene group can be a thiophene, a polythiophene, a pyrrole, a pyridine, or a pyrimidine group.

The heteroarylene can be substituted with one or more W' groups (W' being different from the D, D' and E groups) selected from a halogen atom (preferably I or Br), an alkyl group, and an alkoxy group.

T is preferably selected from an alkylene group optionally interrupted by one or more oxygen atoms, and an arylene group, and more preferably selected from an alkylene group optionally interrupted by one or more oxygen atoms, and a phenylene group .

In one particularly preferred embodiment, T is an arylene group, and more preferably a phenylene group.

T' is preferably selected from an alkylene group optionally interrupted by one or more oxygen atoms, and an arylene group.

In one particularly preferred embodiment, T' is an alkylene group interrupted by one or more oxygen atoms such as 3 oxygen atoms.

In one particularly preferred embodiment, T" is an alkylene group interrupted by one or more oxygen atoms such as 3 oxygen atoms.

Definition of a chromophore group (as a group E in formula (VI))

The chromophore group can be selected from:

- aryl groups comprising an aromatic ring optionally substituted, such as p-toluyl, styrenyl, pyridinyl, oligopyridinyl (bipyridinyle, terpyridinyle), thienyl, or pyrrolyl group,

- aryl groups comprising at least two fused aromatic rings, such as naphtyl, pyrenyl, anthracenyl, phenanthrenyl, quinolyl, phenanthronyl, perylenyl, fluorenyl, carbazolyl or acridinyle group, said fused aromatic rings being optionally substituted with at least one substituant selected from sulfonato, amino, nitro, hydroxy, ether and halogeno groups,

- coloring groups such as coumarinyl, hydroxycoumarinyl, alkoxycoumarinyl, trisulfonatopyrenyl, cyanine, styrylpyridinium, naphtalimidinyl or phenylphenanthridium group.

Definition of a functional group (as a group E in formule (VI) and/or a group D in formula (V) and/or group D' in formula (VII))

The functional group can be selected from:

- functional groups capable of reacting with an organic or inorganic compound to be labelled or detected in a medium to form a covalent, ionic, or hydrogen bond with said organic or inorganic compound to be labelled or detected,

- polar groups that can increase the solubility of the compound (I) or (I') in water such as a phosphate group, a sulfonate group, a sulfate group, a quaternaty ammonium group, an hydroxyl group, a phosphonate group, a poly(ethylene oxide) group, a poly(propylene oxide) group, a sugar, or a natural polysaccharide,

- electron-donating and electron-withdrawing groups that shift absorption and emission wavelengths of the compound (I) or (I') such as a cyano group, a nitro group, a fluoroalkyl group, a perfluoroalkyl group, an amide group, a nitrophenyl group, a substituted triazino group, a sulfonamide group, an alkenyl group or an alkynyl group with the proviso that L (respectively L') is selected from alkenylene and alkynylene groups comprising from 2 to 4 carbon atoms when m (respectively m') is equal to 1,

- functional groups capable of binding to a biological molecule to form a target molecule that can detect and quantify a given compound in a medium (such as binding to an antibody that can detect an antigen), and

- functional groups capable of binding to a polymer organic molecule.

The term "sugar" as a polar group refers to the compounds glucose, fructose, galactose, mannose, sucrose, lactose, maltose and sorbitol.

The term "natural oligosaccharide" as a polar group is taken to mean polysaccharides of plant origin, such as cellulose, starch, agarose, alginate and inulin, and polysaccharides of animal origin, such as hyaluronic acid and chitin.

A functional group capable of binding to a biological molecule as a group E (respectively as a group D) (respectively as a group D') can be selected from the following groups: succinimidyl ester, sulfosuccinimidyl ester isothiocyanate, isocyanate, iodoacetamide, maleimide, sulfonyl halide, phosphoramidite, $C_2$-$C_5$ alkylimidate, $C_6$-$C_{10}$ arylimidate, acid halide, preferably acid chloride and acid bromide, hydrazine substituted with a $C_1$-$C_4$ alkyl, hydroxylamine substituted with a $C_1$-$C_4$ alkyl, carbodiimide, perfluorophenol, and a group -C(O)-Z, where Z is selected from an -OH, -O-succinimide, maleimide, -N-glycine, -N-lysine, - $Y-(L)_m-NH_2$, $-Y-(L)_m-COOH$ and $-Y-(L)_m-SH$ group, where Y is selected from N and O atoms, and m and L are defined in the present invention.

The biological molecule can be a protein, a nucleotide or an antibody.

The functional group capable of binding to a polymer organic molecule can be selected from trialkylsilyl, methacrylate, vinyl, styryl, anilino, pyrrolyl, thiophenyl, furyl, isocyanato, and epoxyde groups.

The polymer organic molecule is preferably polystyrene, polyacrylate, polymethacrylate, polyamide, polyurethane, polyepoxide, poly(ethylene oxide), poly (vinyl chloride), a natural polymer such as cellulose, latex or natural textile fiber.

The functional groups capable of reacting with an organic or inorganic compound to be detected in a medium to form a covalent, ionic, or hydrogen bond with said organic or inorganic compound can be selected from amino, ureido, hydroxyl, thiol, thioether, sulfhydryl, siloxane, carboxyl, carbonyl, and crown ether group.

The inorganic compound can be silica, alumina, zeolite, metal, silicon, or titanium oxide.

In one preferred embodiment, in formula (V) for $R^1$, D is an hydrogen atom, an alkyl group, a functional group, a group of formula (VI) $-C{\equiv}C-(T')_{u'}-E$ when u = 1 and T represents a phenylene group, or a group of formula (VII) - O-T"-D' when u = 1 and T represents a phenylene group.

In one particularly preferred embodiment, formula (V) for $R^1$ is such that:

- u = 1,

- T represents a phenylene group, and

- D represents an alkyl group, a functional group, a group of formula (VI) as defined above or a group of formula (VII) as defined above.

In one particular preferred embodiment, $R^1$ represents a group of formula (V) where u is an integer equal to 1, and in a more preferred embodiment, $R^1$ represents a group of formula (V) where u is an integer equal to 1, T is an arylene group, and D is an alkyl group or a functional group, and advantageously where u is an integer equal to 1, T is a phenylene group, and D is a methyl group or a functional group.

**Definition of $R^2$ and $R^3$**

When the alkyl group is interrupted with one or more oxygen atoms, it is preferably an ether group comprising from 1 to 12 oxygen atoms, and more preferably comprising from 1 to 6 oxygen atoms.

The one or more oxygen atoms interrupting the alkyl group are not terminal oxygen atoms in the alkyl group.

As an example, the alkyl group interrupted with one or more oxygen atoms is a polyether group such as a poly(ethylene oxide) or a poly(propylene oxide) group comprising from 2 to 12 oxygen atoms.

$R^2$ and $R^3$ are preferably alkyl groups, more preferably $C_1$-$C_{10}$ alkyl groups, and even more preferably branched $C_1$-$C_{10}$ alkyl groups.

$R^2$ and $R^3$ are preferably identical.

**Definition of $R^4$, $R^5$, $R^6$ and $R^7$**

In formulae (I) and (I'), $R^4$ and $R^5$, taken together, form a five membered aromatic ring-based heteroaryl group selected from a thiophene ring, a thienothiophene ring, an oligothiophene group such as a bithiophene group, a benzothiophene group, a furan ring, a benzofurane group, a pyrolle ring, and an indole group; and $R^6$ and $R^7$, taken together, form a five membered aromatic ring-based heteroaryl group selected from a thiophene ring, a thienothiophene ring, an oligothiophene group such as a bithiophene group, a benzothiophene group, a furan ring, a benzofurane group, a pyrolle ring, and an indole group.

In others words, $R^4$ and $R^5$ (respectively $R^6$ and $R^7$), taken together, form a five membered aromatic ring which is optionally bonded or fused to at least another aromatic ring, the combination of said five membered aromatic ring and said at least another aromatic ring forming said five membered aromatic ring-based heteroaryl group.

The five membered aromatic ring can thus be a thiophene ring, a furan ring or a pyrolle ring.

As an example, when the five membered aromatic ring-based heteroaryl group is a benzothiophene group, $R^4$ and $R^5$ (respectively $R^6$ and $R^7$), taken together, form a thiophene ring as the five membered aromatic ring and said thiophene ring is fused with a phenyl ring as another aromatic ring so as to form said benzothiophene group.

As another example, when the five membered aromatic ring-based heteroaryl group is a bithiophene group, $R^4$ and $R^5$ (respectively $R^6$ and $R^7$), taken together, form a thiophene ring as the five membered aromatic ring and said thiophene ring is bonded to another thiophene ring as another aromatic ring so as to form said bithiophene group.

Additionally, the five membered aromatic ring formed by taken together $R^4$ and $R^5$ (respectively $R^6$ and $R^7$) and the phenyl group to which $R^4$ and $R^5$ (respectively $R^6$ and $R^7$) are attached to form a fused ring form.

The five membered aromatic ring-based heteroaryl group formed by taken together $R^4$ and $R^5$ (respectively $R^6$ and $R^7$) can be substituted with an alkyl group, more particularly on the another aromatic ring.

In one preferred embodiment, the five membered aromatic ring-based heteroaryl group formed by taken together $R^4$ and $R^5$ and the five membered aromatic ring-based heteroaryl group formed by taken together $R^6$ and $R^7$ are identical.

In one particularly preferred embodiment, the five membered aromatic ring is a thiophene ring. In other words, in one particularly preferred embodiment, $R^4$ and $R^5$, taken together, form a thiophene-based heteroaryl group selected from a thiophene ring, a thienothiophene ring, an oligothiophene group such as a bithiophene group, and a benzothiophene group ; and $R^6$ and $R^7$, taken together, form a thiophene-based heteroaryl group selected from a thiophene ring, a thienothiophene ring, an oligothiophene group such as a bithiophene group, and a benzothiophene group.

**Definition of $R^a$, $R^b$, $R^c$, $R^d$, $R'^a$, $R'^b$, $R'^c$, and $R'^d$**

When the alkyl group is interrupted with one or more oxygen atoms, it is preferably an ether group comprising from 1 to 12 oxygen atoms, and more preferably comprising from 1 to 6 oxygen atoms.

The one or more oxygen atoms interrupting the alkyl group are not terminal oxygen atoms in the alkyl group.

As an example, the alkyl group interrupted with one or more oxygen atoms is a polyether group such as a poly(ethylene oxide) or a poly(propylene oxide) group comprising from 2 to 12 oxygen atoms.

$R^a$, $R^b$, $R^c$, $R^d$, $R'^a$, $R'^b$, $R'^c$, and $R'^d$ are preferably identical.

$R^a$, $R^b$, $R^c$, $R^d$, $R'^a$, $R'^b$, $R'^c$, and $R'^d$ represent preferably hydrogen atoms.

In one particularly preferred embodiment, the compound of the invention is preferably selected from the following formulae (I-a) to (I-d):

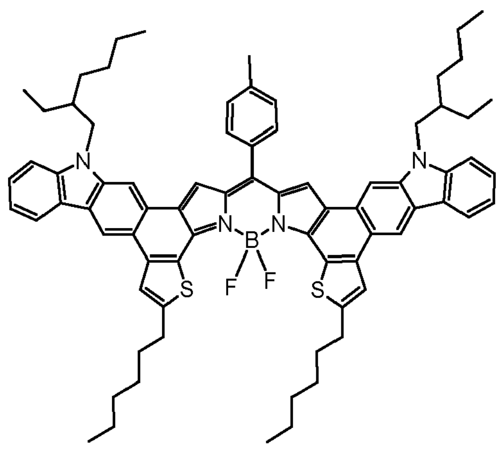

(I-a)

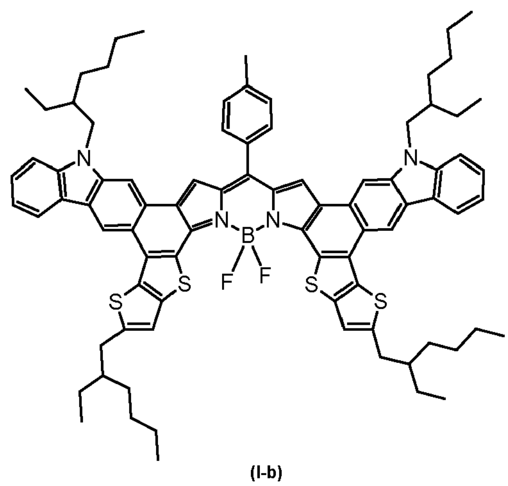

(I-b)

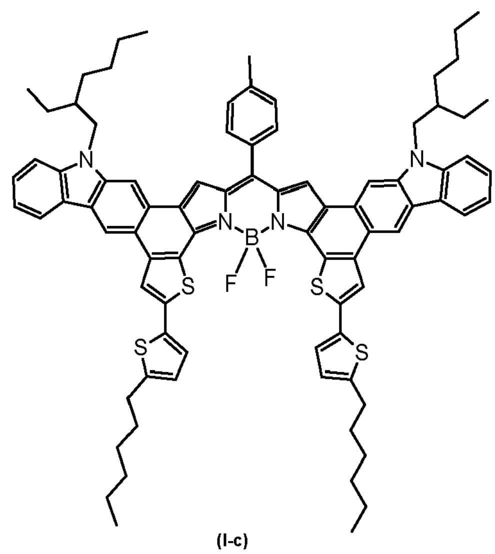

(I-c)

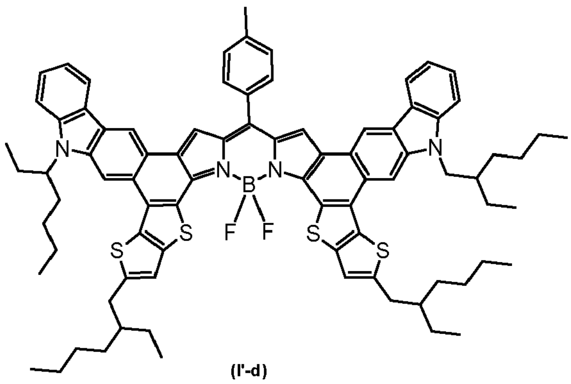

(I'-d)

A second object of the present invention is a method for preparing a compound (I) or (I') as defined in the first object of the present invention, wherein said method comprises at least the following steps:

i) the replacement of the bromine atoms in the 2 and 6 positions of the pyrrole sub-units of a compound of formula (VIII), with carbazole-based heteroaryl groups, so as to form a compound of formula (IX) or a compound of formula (IX') according to the following scheme 4:

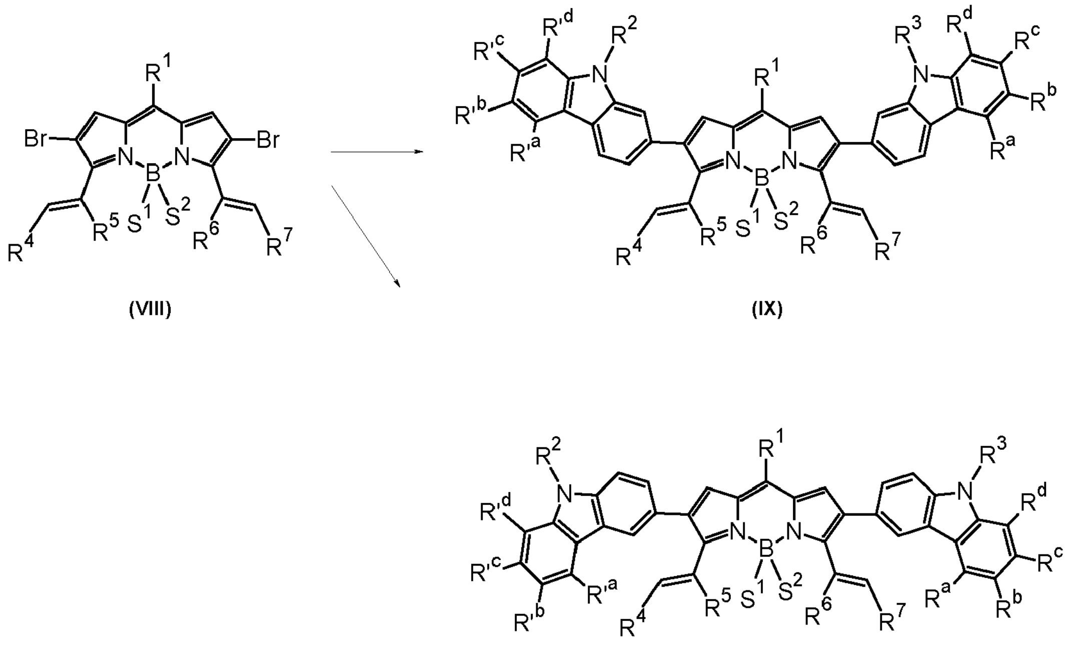

(VIII)

(IX)

(IX')

## SCHEME 4

where $R^1$, $R^2$, $R^3$, $R^4$, $R^5$, $R^6$, $R^7$, $R^a$, $R^b$, $R^c$, $R^d$, $R'^a$, $R'^b$, $R'^c$, and $R'^d$ are as defined in the present invention, and

ii) the cyclization of compound of formula (IX) so as to form an αβ-fused scaffold corresponding to compound (I) or the cyclization of compound of formula (IX') so as to form an αβ-fused scaffold corresponding to compound (I') according to the following scheme 5:

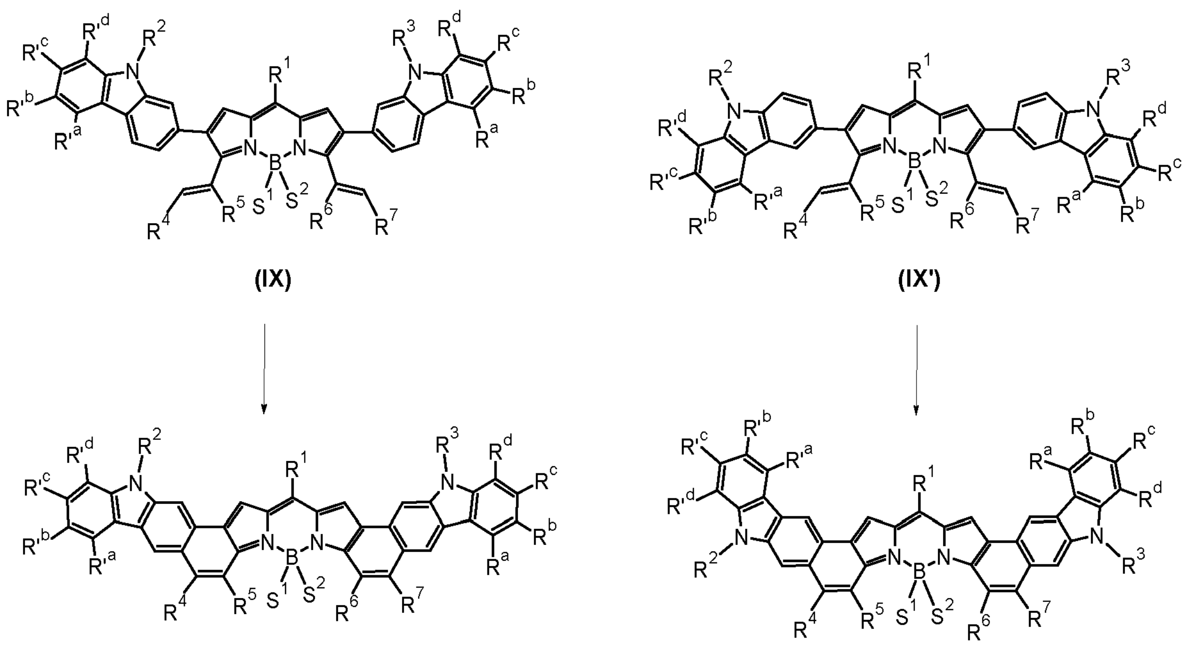

(IX) (IX')

(I) (I')

## SCHEME 5

Step i)

Step i) implements a compound of formula (VIII).

Step i) can be performed through one or two Stille coupling reactions or one or two Suzuki coupling reactions, and preferably through one or two Stille coupling reactions.

Step i) enables to introduce carbazole-based moieties into the BODIPY scaffold with good yields.

Step i) can be implemented through at least one Stille coupling reaction in the presence of a palladium catalyst such as $Pd(PPh_3)_2Cl_2$, and a carbazole-based compound of the following formula (X) [so as to lead to compound (IX)] or a carbazole-based compound of the following formula (X') [so as to lead to compound (IX')]:

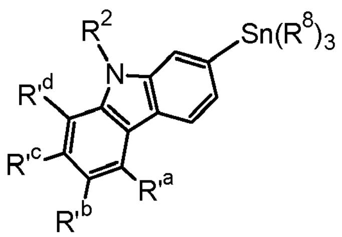

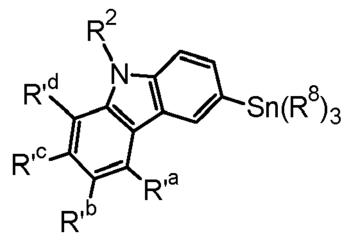

(X) (X')

where $R^2$, $R'^a$, $R'^b$, $R'^c$, and $R'^d$ are as defined in the present invention, and $R^8$ is selected from a butyl and a methyl group.

When $R^2$ and $R^3$ are identical, $R'^a$ and $R^a$ are identical, $R'^b$ and $R^b$ are identical, $R'^c$ and $R^c$ are identical, and $R'^d$ and $R^d$ are identical, the Stille coupling reaction with compound (X) or (X') enables functionalization at both the 2 and 6 positions of the pyrrole sub-units to lead directly to (IX) or (IX') respectively.

When at least $R^2$ and $R^3$ are different, or $R'^a$ and $R^a$ are different, or $R'^b$ and $R^b$ are different, or $R'^c$ and $R^c$ are different, or $R'^d$ and $R^d$ are different, the Stille coupling reaction with compound (X) or (X') enables functionalization at the 2 position of the pyrrole sub-unit only, so that step i) preferably further comprise another Stille coupling reaction in the presence of a palladium catalyst such as $Pd(PPh_3)_2Cl_2$, and a carbazole-based compound of the following formula (XI) or a carbazole-based compound of the following formula (XI'):

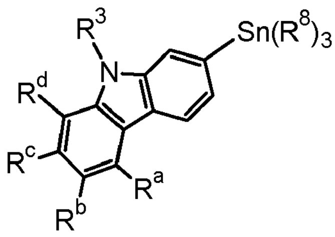

**(XI)**

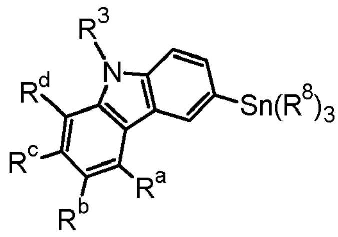

**(XI')**

where $R^3$, $R^a$, $R^b$, $R^c$, $R^d$ and $R^8$ are as defined in the present invention.

Said another Stille coupling reaction with compound (XI) or (XI') enables functionalization at the 6 position of the pyrrole sub-unit only to lead to (IX) or (IX') respectively.

In one preferred embodiment, $R^2$ and $R^3$ are identical, $R'^a$ and $R^a$ are identical, $R'^b$ and $R^b$ are identical, $R'^c$ and $R^c$ are identical, and $R'^d$ and $R^d$ are identical.

The one or two Stille coupling reactions are preferably carried out in a non polar solvent such as toluene, and in particular at a temperature ranging from 80 to 115°C.

Step i) can be implemented through at least one Suzuki coupling reaction in the presence of a palladium catalyst such as $Pd(PPh_3)_2Cl_2$, $Pd(PPh_3)_4$, or $Pd(dppf)_2Cl_2$ and a carbazole-based compound of the following formula (XII) or a carbazole-based compound of the following formula (XII'):

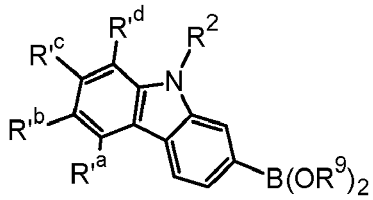

**(XII)**

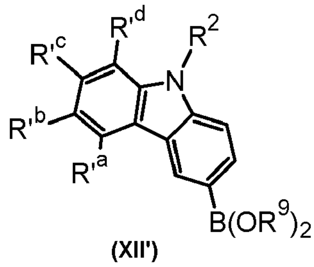

**(XII')**

where $R^2$, $R'^a$, $R'^b$, $R'^c$, and $R'^d$ are as defined in the present invention, and $R^9$ is selected from hydrogen atom, and an alkyl linear or cyclic group (e.g. ethyl, 2,3-dimethylbutane).

When $R^2$ and $R^3$ are identical, $R'^a$ and $R^a$ are identical, $R'^b$ and $R^b$ are identical, $R'^c$ and $R^c$ are identical, and $R'^d$ and $R^d$ are identical, the Suzuki coupling reaction with compound (XII) or (XII') enables functionalization at both the 2 and 6 positions of the pyrrole sub-units to lead directly to (IX) or (IX') respectively.

When at least $R^2$ and $R^3$ are different, or $R'^a$ and $R^a$ are different, or $R'^b$ and $R^b$ are different, or $R'^c$ and $R^c$ are different, or $R'^d$ and $R^d$ are different, the Suzuki coupling reaction with compound (XII) or (XII') enables functionalization at the 2 position of the pyrrole sub-unit only, so that step i) preferably further comprise another Suzuki coupling reaction in the presence of a palladium catalyst such as $Pd(PPh_3)_2Cl_2$, $Pd(PPh_3)_4$, or $Pd(dppf)_2Cl_2$, and a carbazole-based compound of the following formula (XIII) or a carbazole-based compound of the following formula (XIII'):

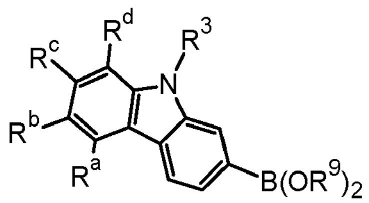

**(XIII)**

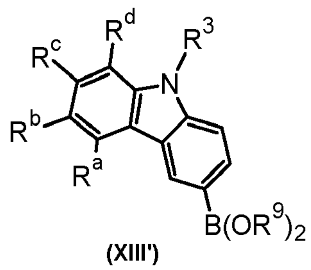

**(XIII')**

where $R^3$, $R^a$, $R^b$, $R^c$, $R^d$ and $R^9$ are as defined in the present invention.

Said another Suzuki coupling reaction with compound (XIII) or (XIII') enables functionalization at the 6 position of the pyrrole sub-unit only to lead to (IX) or (IX') respectively.

In one preferred embodiment, $R^2$ and $R^3$ are identical, $R'^a$ and $R^a$ are identical, $R'^b$ and $R^b$ are identical, $R'^c$

and $R^c$ are identical, and $R'^d$ and $R^d$ are identical.

Step ii)

Step ii) can be performed with known oxidative reacting conditions such as iron (III) chloride ($FeCl_3$) or hypervalent iodine derivatives, or with a newly oxidative pathway involving silver tetrafluoroborate $AgBF_4$.

Indeed, the conventional oxidative cyclization techniques involve many side reactions and do not allow to afford the desired compounds in a pure form and/or quantitative yields. For example $FeCl_3$ involves chlorination on polyaromatic compounds.

Step ii) is thus preferably performed in the presence of $AgBF_4$.

Step ii) is for example carried out in a solvent mixture of dichloromethane and nitromethane, in particular at a temperature ranging from 15 to 30°C.

The reactant $AgBF_4$ represents from about 400% to about 600% in mole, with respect to the number of moles of compound of formula (I) or (I').

In step ii), the mass concentration of compound of formula (I) or (I') ranges from 0.1% to about 0.2% in mass with respect to the total mass of compound of formula (I) or (I'), solvent, and the reactant $AgBF_4$.

Step $i_0$)

Compound of formula (VIII) implemented in step i) as defined above can be prepared by known methods such as the one described in J. Mater. Chem. C, 2018, 6 ,9925-9931.

More particularly, the method of the present invention can further comprise a step $i_0$) involving the replacement of the iodine atoms in the 3 and 5 position of the pyrrole sub-units of a compound (XIV), with five membered aromatic ring-based heteroaryl groups, so as to form a compound of formula (VIII) according to the following scheme 6:

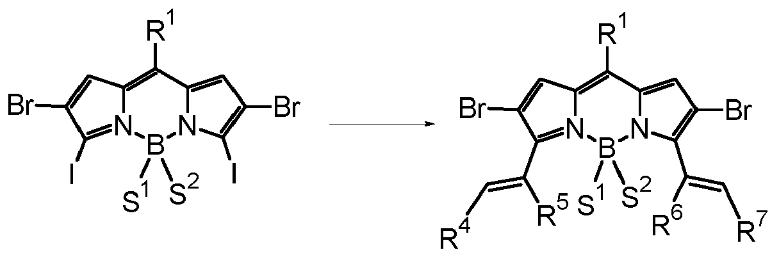

(XIV) (VIII)

**SCHEME 6**

where $R^1$, $S^1$, $S^2$, $R^4$ and $R^5$, and $R^6$ and $R^7$ are as defined in the present invention.

Step $i_0$) can be performed through one or two Stille coupling reactions or one or two Suzuki coupling reactions, and preferably through one or two Stille coupling reactions.

Step $i_0$) enables to introduce five membered aromatic ring-based heteroaryl moieties into the BODIPY scaffold with good yields.

Step $i_0$) can be implemented through at least one Stille coupling reaction in the presence of a palladium catalyst such as $Pd(PPh_3)_2Cl_2$ and a five membered aromatic ring-based compound of the following formula (XV):

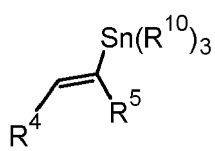

(XV)

where $R^4$ and $R^5$ are as defined in the present invention,and $R^{10}$ is selected from a butyl and a methyl group.

When $R^4$ and $R^5$ taken together from the same five membered aromatic ring-based heteroaryl group as the one formed by taken together $R^6$ and $R^7$, the Stille coupling reaction with compound (XV) enables functionalization at

both the 3 and 5 positions of the pyrrole sub-units to lead directly to compound (VIII).

When $R^4$ and $R^5$ taken together from a different five membered aromatic ring-based heteroaryl group as the one formed by taken together $R^6$ and $R^7$, the Stille coupling reaction with compound (XV) enables functionalization at the 3 position of the pyrrole sub-unit only, so that step $i_0$) preferably further comprise another Stille coupling reaction in the presence of a palladium catalyst such as $Pd(PPh_3)_2Cl_2$, and a five membered aromatic ring-based compound of the following formula (XVI):

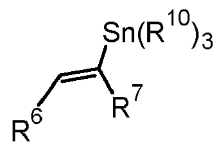

**(XVI)**

where $R^6$ and $R^7$ and $R^{10}$ are as defined in the present invention.

Said another Stille coupling reaction with compound (XVI) enables functionalization at the 5 position of the pyrrole sub-unit only to lead directly to compound (VIII).

In one preferred embodiment, $R^4$ and $R^5$ taken together from the same five membered aromatic ring-based heteroaryl group as the one formed by taken together $R^6$ and $R^7$.

The one or two Stille coupling reactions are preferably carried out in a non polar solvent such as toluene, and in particular at a temperature ranging from 80 to 115°C.

Step $i_0$) can be implemented through one or two Suzuki coupling reactions in the presence of a palladium catalyst such as $Pd(PPh_3)_2Cl_2$, $Pd(PPh_3)_4$, or $Pd(dppf)_2Cl_2$ and a five membered aromatic ring-based compound of the following formula (XVII):

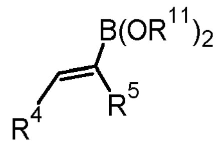

**(XVII)**

where $R^4$ and $R^5$ are as defined in the present invention, and $R^{11}$ is selected from hydrogen atom, and an alkyl linear or cyclic group (e.g. ethyl, 2,3-dimethylbutane).

When $R^4$ and $R^5$ taken together from the same five membered aromatic ring-based heteroaryl group as the one formed by taken together $R^6$ and $R^7$, the Suzuki coupling reaction with compound (XVII) enables functionalization at both the 3 and 5 positions of the pyrrole sub-units to lead directly to compound (VIII).

When $R^4$ and $R^5$ taken together from a different five membered aromatic ring-based heteroaryl group as the one formed by taken together $R^6$ and $R^7$, the Suzuki coupling reaction with compound (XVII) enables functionalization at the 3 position of the pyrrole sub-unit only, so that step $i_0$) preferably further comprise another Suzuki coupling reaction in the presence of a palladium catalyst such as $Pd(PPh_3)_2Cl_2$, $Pd(PPh_3)_4$, or $Pd(dppf)_2Cl_2$, and a five membered aromatic ring-based compound of the following formula (XVIII):

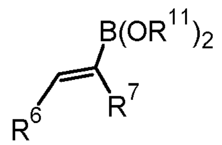

**(XVIII)**

where $R^6$ and $R^7$ and $R^{11}$ are as defined in the present invention.

Said another Suzuki coupling reaction with compound (XVIII) enables functionalization at the 5 position of the pyrrole sub-unit only to lead to compound (VIII).

In one preferred embodiment, $R^4$ and $R^5$ taken together from the same five membered aromatic ring-based heteroaryl group as the one formed by taken together $R^6$ and $R^7$.

Step a)

Compound of formula (XIV) implemented in step $i_0$) as defined above can be prepared by known methods such as the one described in J. Mater. Chem. C, 2018, 6 ,9925-9931.

More particularly, the method of the present invention can further comprise a step a) involving the preparation of the 2,6-dibromo-3,5-diiodo BODIPY of formula (XIV) according to the following scheme 7, by two successive halogenation reactions, a first one involving bromination of the pyrrole sub-units in 2 and 6 positions of a compound of formula (XIX), and a second one involving iodination of the pyrrole sub-units in 3 and 5 positions of a compound of formula (XX):

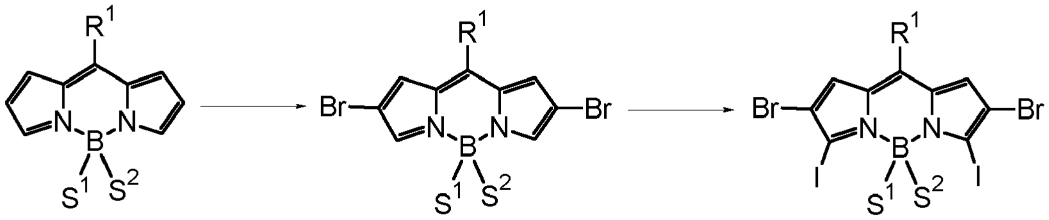

(XIX) (XX) (XIV)

**SCHEME 7**

where $R^1$, $S^1$ and $S^2$ are as defined in the present invention.

The first halogenation reaction involving bromination of the pyrolle sub-units in 2 and 6 positions of a compound of formula (XIX) so as to form compound of formula (XX) can be carried out with N-bromosuccinimide (NBS), preferably in a solvent mixture of dichloromethane and dimethylformamide.

It can be realized at a first temperature ranging from -5°C to 5°C during 30 min to 2h, and then at a second temperature ranging from 15°C to 30°C during 4 to 24 hours.

The second halogenation reaction iodation of the pyrolle sub-units in 3 and 5 positions of a compound of formula (XX) so as to form compound of formula (XIV) can be carried out with a mixture of $I_2$ and $HIO_3$, preferably in a solvent mixture of water and ethanol.

It It can be realized at reflux during 1 to 12 hours.

Each halogenation reaction is selective and enable quantitative yields of compounds (XX) and (XIV).

Thanks to the method of the present invention, new NIR fluorophores compounds (I) and (I') are easily prepared and can be further easily derivatized to obtain probes. Moreover, the method is a simple and systematic approach to tune the wavelengths of BODIPY dyes spanning the NIR region (emission in the 800-1000 nm range), essentially with high quantum yield (25-50%), intense absorption at 750-850 nm (> 200000 $M^{-1}.cm^{-1}$), and poor absorption in the visible range (i.e. they exhibit no or little color when diluted in solutions).

A third object of the present invention is the use of a compound (I) or (I') as defined in the first object of the present invention as a fluorescent dye, for example in the fields of solar cells, re-emitting lasers, medical imaging, night vision devices, molecular photonic wires, security pigments, chemosensors, fluorescent switches, electron transfer reagents, electroluminescent or electrogenerated chemiluminescent agents, solar concentrators, fluorescence guided-surgery, and molecular probes.

The present invention is illustrated in more detail in the examples below, but it is not limited to said examples.

## Examples

Example 1: synthesis of compound (I-a)

Compound (I-a) was prepared according to the following scheme 8:

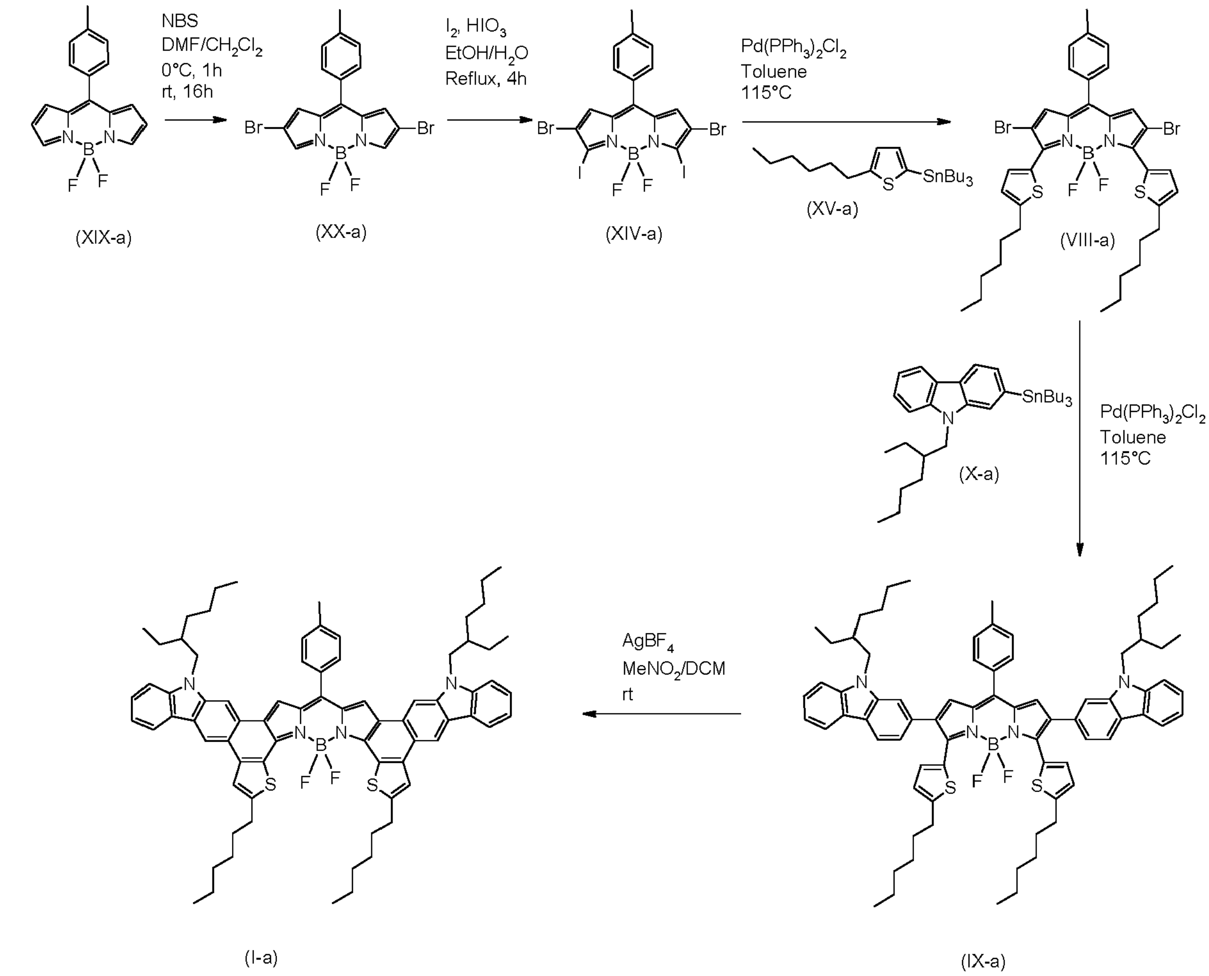


## SCHEME 8

### Preparation of Compound XX-a

Compound **XIX-a** (2.00 g, 7.09 mmol, 1.0 eq) was dissolved in a mixture of dichloromethane (DCM)/dimethylformamide (DMF) (120 mL, 1/1 in volume). At 0°C, NBS (2.77 g, 15.60 mmol, 1.0 eq) was added to the reaction. The reaction was agitated at 0°C for 1h, was allowed to warm up to room temperature and stirred to this temperature for 18h. Water was added to the reaction and the aqueous phase was extracted with ethyl acetate (AcOEt). The combined organic phase was abundantly washed with brine and water, dried over $MgSO_4$ and the solvent was removed under reduce pressure. The crude compound was purified by chromatography column on $SiO_2$ gel with solid deposit on celite to afford the desired product as a gold/red solid (2.94 g, 6.69 mmol, 94%).

$^1H$ NMR (400 MHz, $CDCl_3$): δ = 7.86 (s, 2H), 7.47 (d, J = 8.0 Hz, 2H), 7.39 (d, J = 8.0 Hz, 2H), 7.00 (s, 2H), 2.51 (s, 3H).

### Preparation of Compound XIV-a

Compound **XX-a** (1.22 g, 2.78 mmol, 1.0 eq) and $I_2$ (1.76 g, 6.94 mmol, 2.5 eq) were dissolved in EtOH (100 mL). A solution of $HIO_3$ (1.22 g, 6.94 mmol, 2.5 eq) in water (10 mL) was added to the mixture. The reaction was heated to reflux for 4h. At room temperature, the green precipitate was filtrated off, washed with saturated $Na_2S_2O_3$ and water. The crude solid was purified by chromatography column on $SiO_2$ gel, with solid deposit on celite, to afford the desired product as a green solid (1.02 g, 1.65 mmol, 59%).

$^1H$ NMR (400 MHz, $CDCl_3$): δ = 7.38 (d, J = 8.2 Hz, 2H), 7.34 (d, J = 8.2 Hz, 2H), 6.86 (s, 2H), 2.47 (s, 3H).

### Preparation of Compound VIII-a

Compound **XIV-a** (156 mg, 0.252 mmol, 1.0 eq), Compound **XV-a** (0.564 mmol, 2.3 eq) and $Pd(PPh_3)_2Cl_2$ (5%

mol) were dissolved in dry toluene. The mixture was heated to 115°C for 20h. At room temperature, water was added to the reaction and the aqueous phase was extracted with DCM. The combined organic phase was abundantly washed with brine and water, dried over $MgSO_4$ and the solvent was removed under reduce pressure. The crude compound was purified by chromatography column on $SiO_2$ gel to afford the desired product as as green solid (133 mg, 0.161 mmol, 64%).

$^1$H NMR (400 MHz, $CDCl_3$): δ = 7.74 (d, J = 3.8 Hz, 2H), 7.42 (d, J = 8.0 Hz, 2H), 7.34 (d, J = 8.0 Hz, 2H), 6.95 (s, 2H), 6.86 (d, J = 3.8 Hz, 2H), 2.87 (t, J = 7.7 Hz, 4H), 2.48 (s, 3H), 1.73 (m, 4H), 1.44 - 1.37 (m, 4H), 1.36 - 1.26 (m, 8H), 0.90 (t, J = 7.0 Hz, 6H).

**Preparation of Compound IX-a**

Compound **VIIIa** (100 mg, 0.120 mmol, 1.0 eq), Compound **X-a** (0.360 mmol, 3.0 eq) and $Pd(PPh_3)_2Cl_2$ (5% mol) were dissolved in dry toluene. The mixture was heated to 115°C for 1h30. At room temperature, water was added to the reaction and the aqueous phase was extracted with DCM. The combined organic phase was abundantly washed with brine and water, dried over $MgSO_4$ and the solvent was removed under reduce pressure. The crude compound was purified by chromatography column on $SiO_2$ gel followed by recrystallization to give the expected product as red metallic solid (122 mg, 0.104 mmol, 86%).

$^1$H NMR (400 MHz, $CDCl_3$) δ = 8.06 (d, J = 7.7 Hz, 2H), 7.98 (d, J = 7.7 Hz, 2H), 7.58 (d, J = 8.1 Hz, 2H), 7.48 - 7.42 (m, 4H), 7.38 - 7.32 (m, 4H), 7.20 (t, J = 7.4 Hz, 2H), 7.15 - 7.07 (m, 4H), 7.00 (s, 2H), 6.72 (d, J = 3.8 Hz, 2H), 4.12 - 3.89 (m, 4H), 2.71 (t, J = 7.8 Hz, 4H), 2.48 (s, 3H), 1.94 - 1.81 (m, 2H), 1.65 - 1.57 (m, 4H), 1.42 - 1.12 (m, 28H), 0.90 - 0.75 (m, 18H).

$^{13}$C NMR (126 MHz, $CDCl_3$) δ = 150.85, 149.17, 141.68, 140.99, 140.65, 136.52, 135.47, 132.79, 132.07, 132.03, 131.02, 129.94, 129.34, 128.98, 125.80, 124.74, 122.84, 122.20, 120.48, 120.30, 120.20, 119.01, 109.91, 109.17, 47.56, 39.61, 31.76, 31.46, 31.28, 30.41, 29.16, 29.01, 24.65, 23.34, 22.78, 21.71, 14.28, 11.13.

$^{11}$B NMR (128 MHz, $CDCl_3$) δ = 1.32 (t, $J_{B-F}$ = 31.3 Hz).

$^{19}$F NMR (376 MHz, $CDCl_3$) δ = -134.50 (q, $J_{F-B}$ = 32.2, Hz).

HRMS (ESI-TOF): calcd for $C_{76}H_{87}BF_2N_4NaS_2$ $[M+Na]^+$, 1191.6338; found 1191.6317

**Preparation of Compound I-a**

A freshly prepared suspension of $AgBF_4$ (0.136 mmol, 4.0 eq) in distillated $MeNO_2$ (10 g/L) was added to a solution of compound **IX-a** (40 mg, 0.034 mmol, 1.0 eq) in dry DCM (20 mL) at room temperature. After 1h30 of stirring at room temperature, the reaction was quenched by addition of water and $Et_3N$ (1.0 mL). The resulting mixture was extracted with DCM. The organics layers were combined, washed with water, dried over $MgSO_4$ and the solvent was removed under reduce pressure. The crude product was purified by $SiO_2$ short column followed by recrystallization. The desired product was obtained as greenish grey solid (22 mg, 0.019 mmol, 56%).

$^1$H NMR (400 MHz, $CD_2Cl_2$): δ = 8.85 (s, 2H), 8.22 (d, J = 7.6 Hz, 2H), 7.94 (s, 2H), 7.84 (s, 2H), 7.73 (d, J = 7.9 Hz, 2H), 7.60 (s, 2H), 7.56 - 7.46 (m, 4H), 7.42 (d, J = 8.1 Hz, 2H), 7.26 (t, J = 7.3 Hz, 2H), 4.35 - 4.05 (m, 4H), 3.16 (t, J = 7.9 Hz, 4H), 2.60 (s, 3H), 2.19 - 2.08 (m, 2H), 2.04 - 1.96 (m, 4H), 1.62 - 1.57 (m, 4H), 1.50 - 1.32 (m, 20H), 1.30 - 1.23 (m, 4H), 0.97 (t, J = 7.2 Hz, 6H), 0.92 (t, J = 7.5 Hz, 6H), 0.84 (t, J = 7.2 Hz, 6H).

$^{13}$C NMR (126 MHz, $CDCl_3$) δ = 153.93, 145.85, 143.96, 142.64, 140.84, 140.17, 138.23, 132.80, 131.55, 129.90, 129.25, 126.57, 125.71, 123.27, 123.20, 122.09, 121.01, 120.66, 120.50, 119.27, 116.61, 109.16, 102.51, 47.53, 39.45, 31.83, 31.49, 31.27, 31.07, 29.32, 29.04, 24.89, 23.14, 22.82, 21.71, 14.31, 14.16, 11.22.

$^{11}$B NMR (160 MHz, $CDCl_3$) δ = 2.01(t, $J_{B-F}$ = 32.7 Hz).

$^{19}$F NMR (471 MHz, $CDCl_3$) δ = -140.05 (q, $J_{F-B}$ = 35.9 Hz).

HRMS (ESI-TOF): calcd for $C_{76}H_{83}BF_2N_4S_2$ $[M]^+$, 1164.6127; found 1164.6119.

Example 2: synthesis of compound (I-b)

Compound (I-b) was prepared according to the following scheme 9:

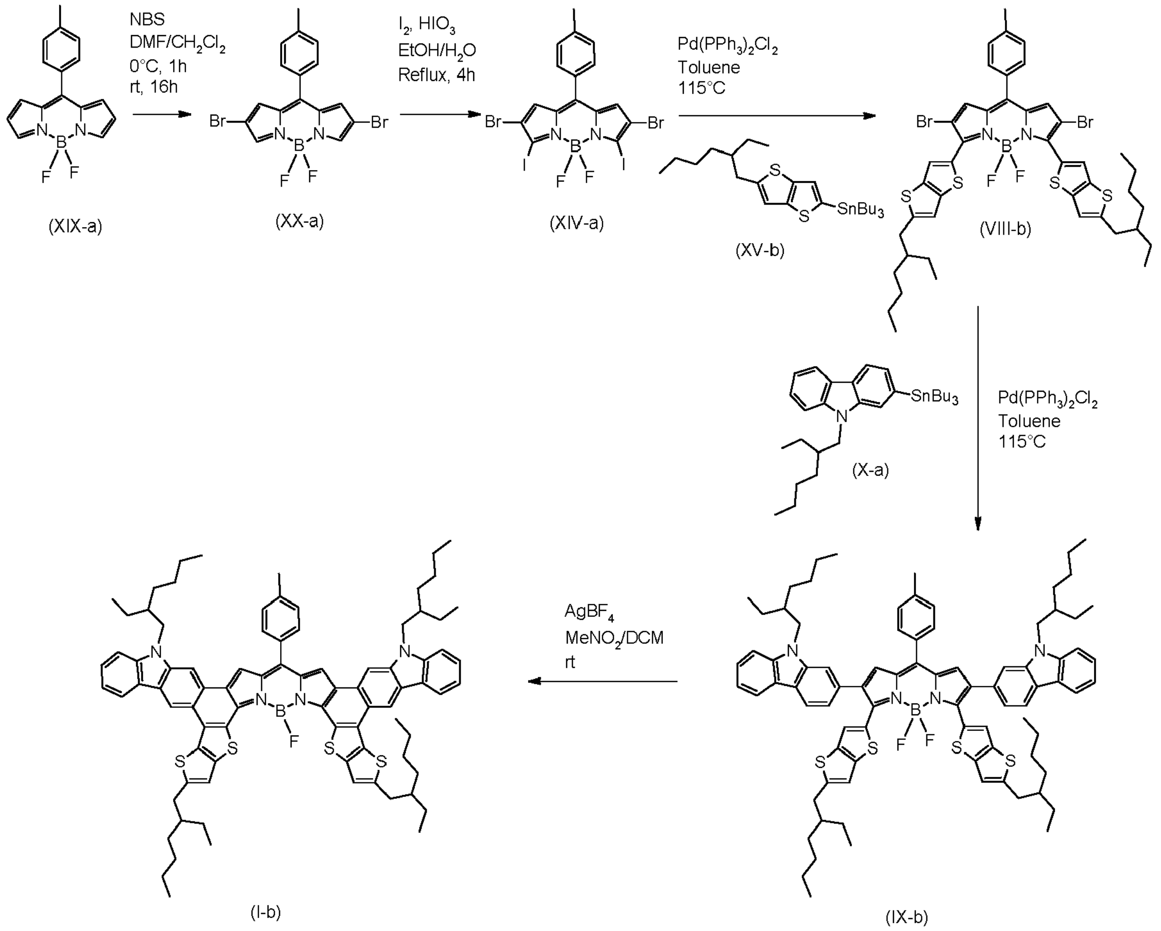


## SCHEME 9

### Preparation of Compound VIII-b

Compound **XIV-a** (209 mg, 0.337 mmol, 1.0 eq), Compound **XV-b** (0.792 mmol, 2.3 eq) and $Pd(PPh_3)_2Cl_2$ (5% mol) were dissolved in dry toluene. The mixture was heated to 115°C for 1h30. At room temperature, water was added to the reaction and the aqueous phase was extracted with DCM. The combined organic phase was abundantly washed with brine and water, dried over $MgSO_4$ and the solvent was removed under reduce pressure. The crude compound was purified by chromatography column on $SiO_2$ gel to afford the desired product as green solid (187 mg, 0.199 mmol, 59%).

$^1$H NMR (400 MHz, $CDCl_3$): δ = 7.97 (d, J = 0.5 Hz, 2H), 7.44 (d, J = 8.0 Hz, 2H), 7.36 (d, J = 8.0 Hz, 2H), 7.00 (s, 2H), 6.94 (d, J = 0.5 Hz, 2H), 2.83 (d, J = 6.9 Hz, 4H), 2.49 (s, 3H), 1.69 - 1.58 (m, 2H), 1.43 - 1.27 (m, 16H), 0.91 (t, J = 7.4 Hz, 12H).

$^{13}$C NMR (126 MHz, $CDCl_3$): δ = 151.04, 148.70, 143.46, 141.43, 141.31, 138.23, 135.07, 132.14, 130.84, 130.69, 129.68, 129.54, 125.76 (t, J = 5.9 Hz), 117.42, 109.97, 41.60, 35.60, 32.52, 29.03, 25.61, 23.16, 21.65, 14.32, 10.93.

$^{11}$B NMR (160 MHz, $CDCl_3$): δ = 1.02 (t, $J_{B-F}$ = 31.1 Hz).

$^{19}$F NMR (471 MHz, $CDCl_3$): δ = -133.24 (q, $J_{F-B}$ = 31.2 Hz).

HRMS (ESI-TOF): calcd for C44H47BBr2F2N2S4 $[M]^+$, 938.1044; found 938.1032

### Preparation of Compound IX-b

Compound **VIII-b** (187 mg, 0.199 mmol, 1.0 eq), Compound **X-a** (0.666 mmol, 3.3 eq) and $Pd(PPh_3)_2Cl_2$ (5% mol) were dissolved in dry toluene. The mixture was heated to 115°C for 24h. At room temperature, water was added to the reaction and the aqueous phase was extracted with DCM. The combined organic phase was abundantly washed with brine and water, dried over $MgSO_4$ and the solvent was removed under reduce pressure. The crude compound was purified by chromatography column on $SiO_2$ gel to afford the desired product as green solid (188 mg, 0.141 mmol,

71%).

$^{1}H$ NMR (400 MHz, $CDCl_3$): δ = 8.06 (d, J = 7.7 Hz, 2H), 8.01 (d, J = 8.0 Hz, 2H), 7.84 (s, 2H), 7.60 (d, J = 8.0 Hz, 2H), 7.49 - 7.39 (m, 2H), 7.36 (d, J = 7.9 Hz, 2H), 7.33 (d, J = 8.2 Hz, 2H), 7.25 - 7.09 (m, 6H), 7.05 (s, 2H), 6.74 (s, 2H), 4.03 - 3.80 (m, 4H), 2.89 - 2.69 (m, 4H), 2.49 (s, 3H), 1.79 - 1.68 (m, 2H), 1.68 - 1.55 (m, 2H), 1.41 - 1.25 (m, 16H), 1.24 - 1.08 (m, 16H), 0.95 - 0.85 (m, 12H), 0.84 - 0.80 (m, 6H), 0.71 (t, J = 7.4 Hz, 6H).

$^{13}C$ NMR (126 MHz, $CDCl_3$): δ = 149.60, 148.76, 142.66, 141.63, 140.78, 140.75, 138.00, 136.79, 135.70, 132.14, 131.84, 131.60, 130.96, 129.33, 129.16, 125.76, 124.82, 122.65, 122.26, 120.41, 120.23, 120.19, 118.91, 117.43, 110.08, 109.09, 47.38, 41.49, 39.45, 35.45, 32.51, 31.15, 29.01, 28.84, 25.56, 24.48, 23.26, 23.16, 21.64, 14.32, 14.20, 10.89.

$^{11}B$ NMR (128 MHz, $CDCl_3$): δ = 1.43 (t, $J_{B-F}$, 31.2 Hz).

$^{19}F$ NMR (471 MHz, $CDCl_3$): δ = -133.93 (q, $J_{F-B}$ = 31.4 Hz).

HRMS (ESI-TOF): calcd for $C_{84}H_{95}BF_2N_4S_4$ $[M]^+$, 1336.6508; found 1336.6485.

**Preparation of Compound I-b**

A freshly prepared suspension of $AgBF_4$ (0.150 mmol, 4.1 eq) in distillated $MeNO_2$ (10 g/L) was added to a solution of compound **IX-b** (50 mg, 0.037 mmol, 1.0 eq) in dry DCM (20 mL) at room temperature. After 1h of stirring at room temperature, the reaction was quenched by addition of water and $Et_3N$ (1.0 mL). The resulting mixture was extracted with DCM. The organics layers were combined, washed with water, dried over $MgSO_4$ and the solvent was removed under reduce pressure. The crude product was purified by $SiO_2$ short column followed by recrystallization. The desired product was obtained as a black powder (40 mg, 0.037 mmol, 81%).

$^{1}H$ NMR (400 MHz, $C_2D_2Cl_4$): δ = 8.97 (s, 2H), 8.33 (d, J = 7.5 Hz, 2H), 7.98 (s, 2H), 7.74 - 7.70 (m, 2H), 7.62 (s, 2H), 7.55 (t, J = 7.7 Hz, 2H), 7.47 (d, J = 7.7 Hz, 2H), 7.43 (d, J = 8.2 Hz, 2H), 7.35 - 7.25 (m, 4H), 4.32 - 4.07 (m, 4H), 3.07 (d, J = 6.6 Hz, 4H), 2.59 (s, 3H), 2.18 - 2.07 (m, 2H), 1.91 - 1.84 (m, 2H), 1.55 - 1.35 (m, 28H), 1.34 - 1.22 (m, 4H), 1.03 (t, J = 7.4 Hz, 6H), 1.00 - 0.92 (m, 9H), 0.90 - 0.83 (m, 6fH).

$^{13}C$ NMR (126 MHz, $CDCl_3$): δ = 151.25, 145.94, 144.29, 142.57, 140.61, 140.03, 139.72, 138.61, 135.59, 133.56, 132.57, 131.59, 130.19, 129.07, 126.52, 125.80, 124.86, 123.26, 123.07, 120.97, 120.68, 119.73, 119.20, 118.48, 116.88, 109.15, 102.72, 47.28, 41.80, 39.49, 35.75, 32.68, 31.11, 29.08, 25.85, 24.93, 23.27, 23.14, 21.63, 14.38, 14.15, 11.23, 11.04.

$^{11}B$ NMR (160 MHz, $CDCl_3$): δ = 2.02 (t, J = 31.8 Hz).

$^{19}F$ NMR (471 MHz, $CDCl_3$): δ = -133.93 (q, $J_{F-B}$ = 31.8 Hz).

HRMS (ESI-TOF): calcd for $C_{84}H_{91}BF_2N_4S_4$ $[M]^+$, 1332.6195; found 1332.6197

Example 3: synthesis of compound (I-c)

Compound (I-c) was prepared according to the following scheme 10:

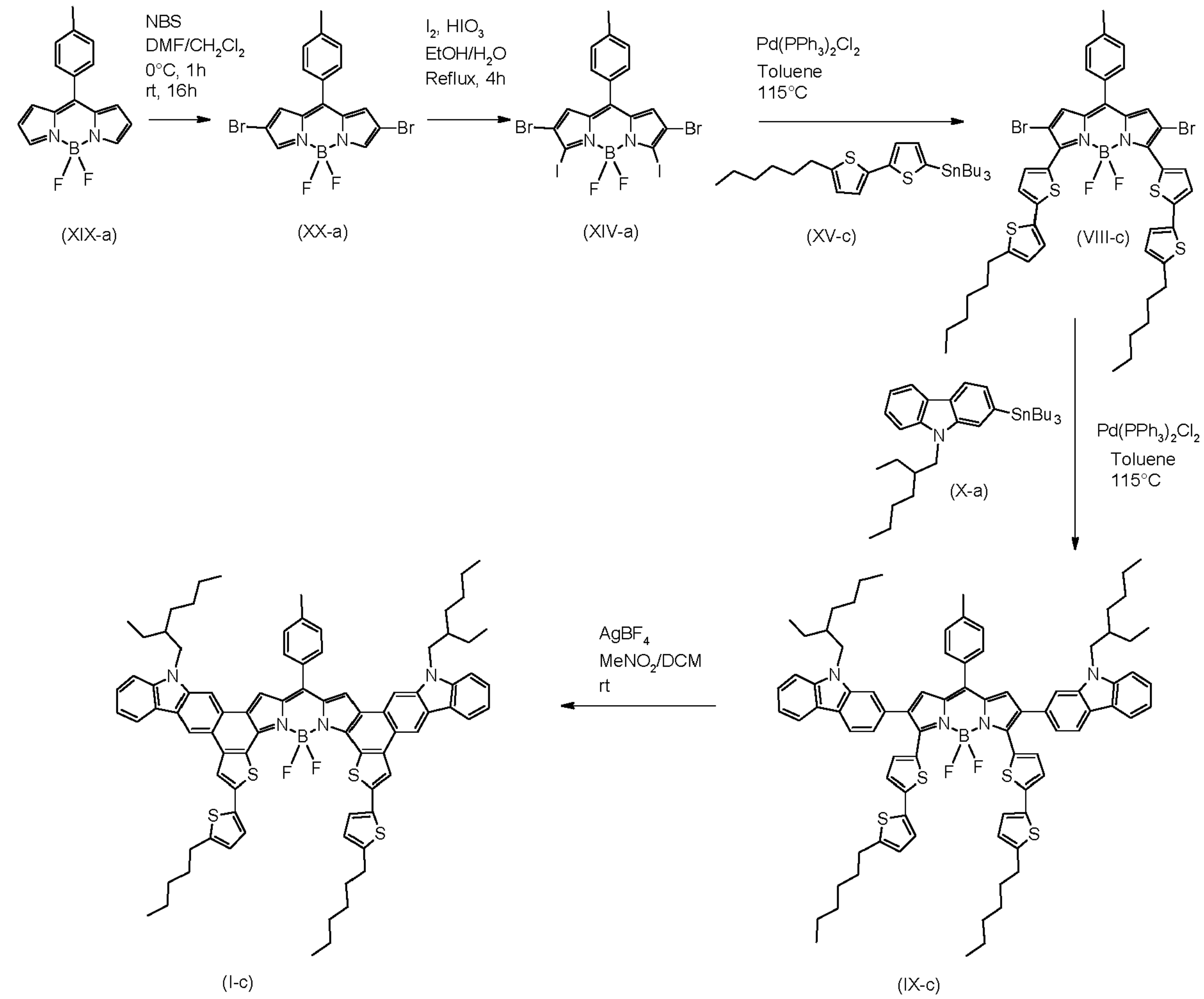


(XIX-a) (XX-a) (XIV-a) (XV-c) (VIII-c) (X-a) (I-c) (IX-c)

## SCHEME 10

### Preparation of Compound VIII-c

Compound **XIV-a** (203 mg, 0.323 mmol, 1.0 eq), Compound **XV-c** ((0.843 mmol, 2.6 eq) and $Pd(PPh_3)_2Cl_2$ (5% mol) were dissolved in dry toluene. The mixture was heated to 115°C for 4h. At room temperature, water was added to the reaction and the aqueous phase was extracted with DCM. The combined organic phase was abundantly washed with brine and water, dried over $MgSO_4$ and the solvent was removed under reduce pressure. The crude compound was purified by chromatography column on $SiO_2$ gel to afford the desired product as green solid (152 mg, 0.162 mmol, 50%).

$^1H$ NMR (400 MHz, $CDCl_3$): $\delta$ = 7.87 (d, J = 4.0 Hz, 2H), 7.43 (d, J = 8.0 Hz, 2H), 7.35 (d, J = 8.0 Hz, 2H), 7.17 (d, J = 4.0 Hz, 2H), 7.11 (d, J = 3.5 Hz, 2H), 6.98 (s, 2H), 6.70 (d, J = 3.5 Hz, 2H), 2.80 (t, J = 7.5 Hz, 4H), 2.49 (s, 3H), 1.73 - 1.61 (m, 2H), 1.43 - 1.27 (m, 12H), 0.97 - 0.83 (m, 6H).

$^{13}C$ NMR (126 MHz, $CDCl_3$): $\delta$ = 147.95, 147.09, 143.45, 141.33, 140.82, 135.10, 134.74, 134.20, 132.05, 130.87, 130.69, 129.50, 128.26, 125.25, 124.81, 123.77, 31.70, 31.67, 30.41, 28.88, 22.72, 21.64, 14.23.

$^{11}B$ NMR (128 MHz, $CDCl_3$): $\delta$ = 1.06 (t, $J_{B-F}$ = 31.3 Hz).

$^{19}F$ NMR (471 MHz, $CDCl_3$): $\delta$ = -134.25 (q, $J_{F-B}$ = 31.6 Hz).

HRMS (ESI-TOF): calcd for C44H43BBr2F2N2S4 $[M]^+$, 934.0731; found 934.0792

### Preparation of Compound IX-c

Compound **VIII-c** (151 mg, 0.161 mmol, 1.0 eq), Compound **X-a** ((0.552 mmol, 3.4 eq) and $Pd(PPh_3)_2Cl_2$ (5% mol) were dissolved in dry toluene. The mixture was heated to 115°C for 24h. At room temperature, water was added to the reaction and the aqueous phase was extracted with DCM. The combined organic phase was abundantly washed with brine and water, dried over $MgSO_4$ and the solvent was removed under reduce pressure. The crude compound

was purified by chromatography column on $SiO_2$ gel followed by recrystallization to afford the desired product as black solid (155 mg, 0.116 mmol, 72%).

$^1H$ NMR (400 MHz, $CDCl_3$): δ = 8.06 (d, J = 7.6 Hz, 2H), 8.02 (d, J = 8.6 Hz, 2H), 7.59 (d, J = 8.1 Hz, 2H), 7.53 (d, J = 3.9 Hz, 2H), 7.47 - 7.39 (m, 2H), 7.38 - 7.30 (m, 4H), 7.24 - 7.15 (m, 6H), 7.07 - 6.99 (m, 4H), 6.86 (d, J = 3.6 Hz, 2H), 6.57 (d, J = 3.6 Hz, 2H), 4.11 - 3.86 (m, 4H), 2.73 (t, J = 7.5 Hz, 4H), 2.48 (s, 3H), 1.91 - 1.77 (m, 2H), 1.66 - 1.57 (m, 4H), 1.41 - 1.11 (m, 28H), 0.88 (t, J = 6.7 Hz, 6H), 0.83 - 0.75 (m, 6H), 0.73 (t, J = 7.4 Hz, 6H).

$^{13}C$ NMR (126 MHz, $CDCl_3$): δ = 148.14, 146.22, 142.49, 141.66, 140.84, 140.70, 136.67, 135.71, 134.43, 133.70 (t, J = 4.5 Hz), 131.84, 131.57, 130.95, 130.42, 129.31, 129.03, 125.73, 124.97, 124.28, 123.40, 122.66, 122.27, 120.41, 120.31, 120.07, 118.89, 109.93, 109.13, 47.52, 39.52, 31.68, 31.66, 31.18, 30.31, 28.82, 24.57, 23.25, 22.70, 21.63, 14.21, 14.16, 10.92.

$^{11}B$ NMR (128 MHz, $CDCl_3$): δ = 1.35 (t, $J_{B-F}$ = 31.6 Hz).

$^{19}F$ NMR (471 MHz, $CDCl_3$): δ = -134.05 (q, $J_{F-B}$ = 31.8 Hz).

HRMS (ESI-TOF): calcd for $C_{84}H_{91}BF_2N_4S_4$ $[M]^+$, 1332.6195; found 1332.6216.

## Compound I-c

A freshly prepared suspension of $AgBF_4$ (0.147 mmol, 4.0 eq) in distillated $MeNO_2$ (10 g/L) was added to a solution of compound **IX-c** (49 mg, 0.037 mmol, 1.0 eq) in dry DCM (20 mL) at room temperature. After 1h30 of stirring at room temperature, the reaction was quenched by addition of water and $Et_3N$ (1.0 mL). The resulting mixture was extracted with DCM. The organics layers were combined, washed with water, dried over $MgSO_4$ and the solvent was removed under reduce pressure. The crude product was purified by $SiO_2$ short column followed by recrystallization. The desired product was obtained as a black powder (29 mg, 0.022 mmol, 59%).

$^1H$ NMR (400 MHz, $C_2D_2Cl_4$, 100°C): δ = 8.68 (s, 2H), 8.19 (d, J = 7.5 Hz, 2H), 7.97 - 7.88 (m, 6H), 7.63 - 7.57 (m, 6H), 7.54 - 7.48 (m, 6H), 7.33 (t, J = 7.5 Hz, 2H), 6.99 (d, J = 3.5 Hz, 2H), 4.38 - 4.24 (m, 4H), 3.06 (t, J = 7.3 Hz, 4H), 2.70 (s, 3H), 2.38 - 2.17 (m, 2H), 2.00 - 1.90 (m, 4H), 1.66 - 1.62 (m, 4H), 1.60 - 1.47 (m, 20H), 1.46 - 1.35 (m, 4H), 1.11 - 1.01 (m, 12H), 0.95 (t, J = 7.3 Hz, 6H).

$^{13}C$ NMR (101 MHz, $C_2D_2Cl_4$, 100°C): δ = 147.69, 145.12, 144.01, 142.94, 141.12, 140.03, 138.99, 132.87, 131.65, 130.35, 129.09, 126.69, 125.46, 123.54, 123.26, 122.45, 120.78, 119.44, 118.91, 116.34, 109.15, 102.53, 47.83, 39.62, 31.67, 31.60, 31.47, 30.56, 29.11, 28.94, 25.09, 22.95, 22.59, 21.49, 14.02, 13.85, 11.02.

$^{11}B$ NMR (160 MHz, $C_2D_2Cl_4$): δ = 3.04 (t, $J_{B-F}$ = 31.7 Hz).

$^{19}F$ NMR (471 MHz, $C_2D_2Cl_4$): δ = δ -137.42 (s, broad).

HRMS (ESI-TOF): calcd for $C_{84}H_{87}BF_2N_4S_4$ $[M]^+$, 1328.5869; found 1328.5854.

Example 4: synthesis of compound (I'-d)

Compound (I'-d) was prepared according to the following scheme 11:

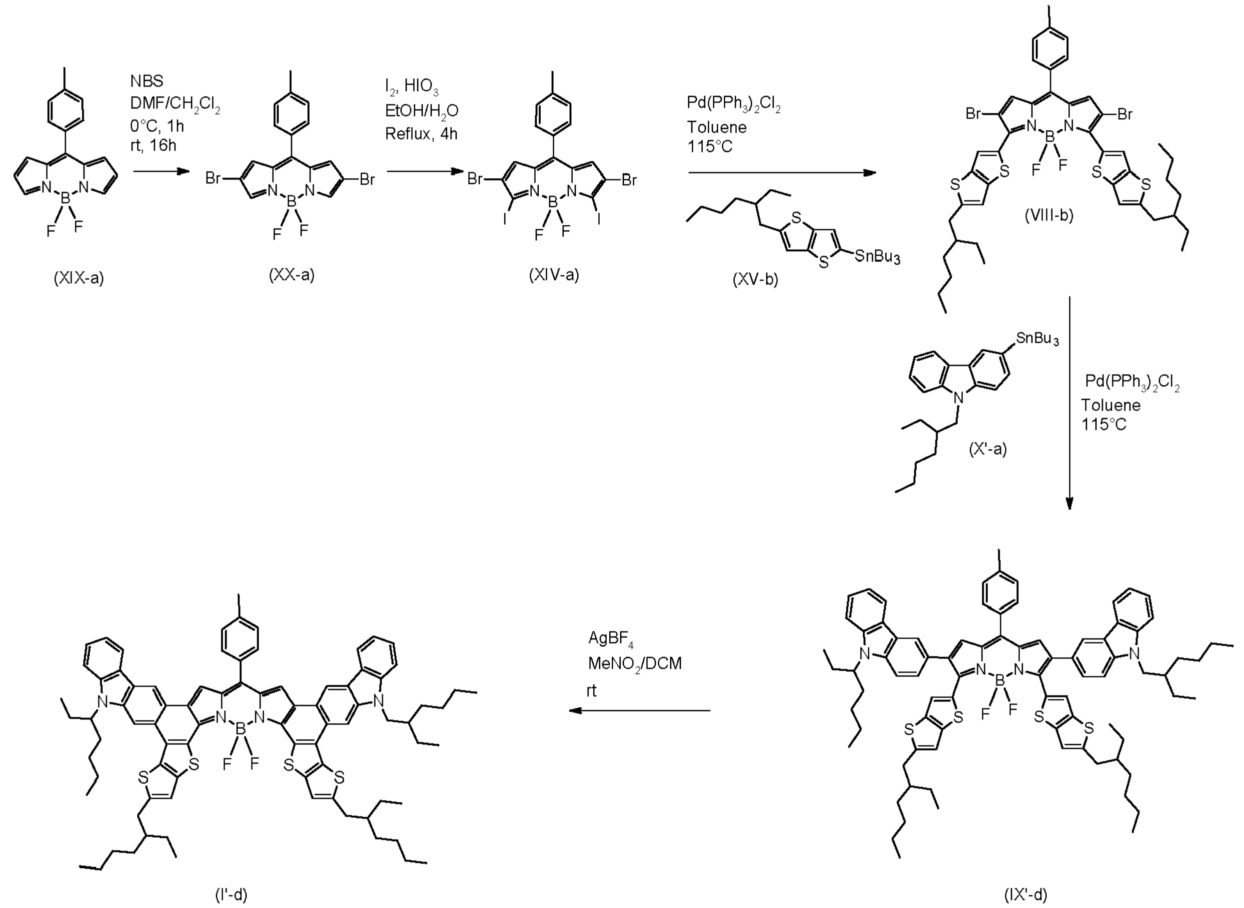


## SCHEME 11

### Preparation of Compound IX'-d

Compound **VIII-b** (133 mg, 0.141 mmol, 1.0 eq), Compound **X'-a** 0.412 mmol, 2.9 eq) and $Pd(PPh_3)_2Cl_2$ (5% mol) were dissolved in dry toluene. The mixture was heated to 115°C for 24h. At room temperature, water was added to the reaction and the aqueous phase was extracted with DCM. The combined organic phase was abundantly washed with brine and water, dried over $MgSO_4$ and the solvent was removed under reduce pressure. The crude compound was purified by chromatography column on $SiO_2$ gel to afford the desired product as green solid (133 mg, 0.099 mmol, 71%).

$^1$H NMR (500 MHz, $CD_2Cl_2$): δ = 8.02 - 8.01 (m, 2H), 7.96 (dt, J = 7.8, 1.0 Hz, 2H), 7.82 (s, 2H), 7.65 (d, J = 8.1 Hz, 2H), 7.49 - 7.36 (m, 6H), 7.31 (d, J = 8.4 Hz, 2H), 7.27 (dd, J = 8.4, 1.7 Hz, 2H), 7.18 (ddd, J = 7.9, 6.6, 1.4 Hz, 2H), 7.08 (s, 2H), 6.82 (s, 2H), 4.20 - 4.11 (m, 4H), 2.80 (d, J = 6.8 Hz, 4H), 2.10 - 2.01 (m, 2H), 1.66 - 1.57 (m, 2H), 1.43 - 1.20 (m, 36H), 0.94 - 0.86 (m, 18H), 0.84 (t, J = 7.2 Hz, 6H).

$^{13}$C NMR (126 MHz, $CD_2Cl_2$): δ =150.38, 148.80, 142.89, 141.82, 141.36, 140.98, 138.24, 136.09, 132.91, 132.20, 131.50, 129.71, 129.59, 127.60, 126.28, 125.28, 125.10, 123.26, 123.17, 121.31, 120.71, 119.44, 117.88, 109.77, 109.36, 48.06, 42.01, 39.98, 35.82, 32.90, 31.55, 29.39, 29.33, 26.01, 24.97, 23.62, 23.56, 21.76, 14.47, 14.35, 11.24, 11.09.

$^{11}$B NMR (160 MHz, $CD_2Cl_2$): δ = 1.38 (t, $J_{B-F}$ = 31.7 Hz).

$^{19}$F NMR (471 MHz, $CD_2Cl_2$): δ = -133.97 (q, $J_{F-B}$ = 31.6 Hz).

HRMS (ESI-TOF): calcd for $C_{84}H_{95}BF_2N_4S_4$ $[M]^+$, 1336.6508; found 1336.6528.

### Preparation of Compound I'-d

A freshly prepared suspension of $AgBF_4$ (0.222 mmol, 6.0 eq) in distillated $MeNO_2$ (10 g/L) was added to a solution of compound **IX'-d** (50 mg, 0.037 mmol, 1.0 eq) in dry DCM (20 mL) at room temperature. After 1h30 of stirring at room temperature, the reaction was quenched by addition of water and $Et_3N$ (1.0 mL). The resulting mixture was extracted with DCM. The organics layers were combined, washed with water, dried over $MgSO_4$ and the solvent was

removed under reduce pressure. The crude product was purified by $SiO_2$ short column followed by recrystallization. The desired product was obtained as a black powder (24 mg, 0.018 mmol, 49%).

$^1H$ NMR (500 MHz, $C_2D_2Cl_4$): $\delta$ = 8.75 (s, 2H), 8.22 (d, J = 7.5 Hz, 2H), 8.10 (s, 2H), 7.75 (d, J = 7.8 Hz, 2H), 7.61 - 7.48 (m, 6H), 7.40 (d, J = 8.2 Hz, 2H), 7.29 (s, 2H), 7.25 (t, J = 7.5 Hz, 2H), 4.24 (d, J = 5.9 Hz, 4H), 3.04 (d, J = 6.6 Hz, 4H), 2.66 (s, 3H), 2.22 (p, J = 6.6 Hz, 2H), 1.81 (h, J = 5.9 Hz, 2H), 1.58 - 1.36 (m, 28H), 1.34 - 1.29 (m, 4H), 1.08 - 0.96 (m, 18H), 0.91 (t, J = 7.3 Hz, 6H).

$^{13}C$ NMR (126 MHz, $C_2D_2Cl_4$): $\delta$ = 151.09, 144.79, 143.45, 142.69, 140.13, 140.01, 138.59, 134.40, 133.44, 132.22, 131.48, 130.13, 129.09, 126.75, 126.52, 124.36, 123.25, 122.16, 120.75, 119.89, 119.35, 119.00, 118.11, 115.60, 108.89, 103.84, 47.70, 41.46, 39.23, 35.25, 32.40, 31.05, 28.84, 28.75, 25.58, 24.37, 23.10, 22.97, 21.67, 14.22, 14.08, 10.95, 10.91.

$^{11}B$ NMR (160 MHz, $C_2D_2Cl_4$): $\delta$ = 3.22 (t, J = 33.0 Hz).

$^{19}F$ NMR (471 MHz, $C_2D_2Cl_4$): $\delta$ = -136.72 (s, broad).

HRMS (ESI-TOF): calcd for $C_{84}H_{91}BF_2N_4S_4$ $[M]^+$, 1332.6182; found 1332.6229.

Example 5: physico-chemical properties of compounds (I-a), (I-b), (I-c) and (I'-d)

The photophysical characterization of compounds (I-a), (I-b), (I-c), and (I'-d) was carried out by analyzing the corresponding absorption and fluorescence spectra in the NIR region of the spectrum.

Table 1 below shows the photophysical properties of compounds (I-a), (I-b), (I-c), and (I'-d) depending on the solvent used to dilute said compound ($C \approx 10^{-6}$ M): $\lambda_{abs}$ represents the maximum absorption peak wavelength, s represents the molar extinction coefficient at the maximum absorption peak wavelength, $\lambda_{em}$ represents the maximum emission peak wavelength, $\phi_f$ represents the relative quantum yield (using known standard IR-125), $\tau$ represents the lifetime at excited state, $k_r$ represents the radiative decay constant, $k_{nr}$ represents the non-radiative decay constant, and $\Delta_{ss}$ represents the stokes shift, $k_r$, $k_{nr}$, and $\Delta_{ss}$ being determined with the following equations:

$$k_r = \phi_f / \tau \text{ and } k_{nr} = (1 - \phi_f) / \tau.$$

**TABLE 1**

| | (I-a) | | (I-b) | | (I-c) | | (I'-d) | |
|---|---|---|---|---|---|---|---|---|
| **solvent** | DCM | Toluene | DCM | Toluene | DCM | Toluene | DCM | Toluene |
| $\lambda_{abs}$ **(nm)** | 772 | 774 | 811 | 815 | 831 | 832 | 824 | 823 |
| $\varepsilon \times 10^4$ **($M^{-1}cm^{-1}$)** | 22.28 | 19.3 | 25.64 | 25.4 | 18.17 | 15.9 | 20.37 | 21.80 |
| $\lambda_{em}$ **(nm)** | 805 | 788 | 839 | 829 | 868 | 852 | 858 | 837 |
| $\phi_f$ **(%)** | 47 | 73 | 37 | 0.48 | 26 | 34 | 22 | 38 |
| $\tau$ **(ns)** | 3.56 | 4.06 | 2.83 | 3.08 | 2.47 | 2.66 | 1.93 | 1.27 |
| $k_r$ **($10^8$ $s^{-1}$)** | 1.33 | 1.81 | 1.31 | 1.56 | 1.05 | 1.28 | 1.14 | 1.27 |
| $k_{nr}$ **($10^8$ $s^{-1}$)** | 1.47 | 0.655 | 2.23 | 1.69 | 3.00 | 2.48 | 4.04 | 2.58 |
| $\Delta_{ss}$ **($cm^{-1}$)** | 531 | 229 | 411 | 207 | 480 | 297 | 512 | 203 |

The photophysical properties are measured with a device commercialized under the brand name Fluoromax4 by the firm Horiba.

Figure 1 represents the absorption spectrum, normalized to molar absorption, of compound (I-a) (curve with plain line), of compound (I-b) (curve with dotted line), and of compound (I-c) (curve with dashed line).

Figure 2 represents the emission spectrum, normalized to emission intensity maximum, of compound (I-a) (curve with plain line), of compound (I-b) (curve with dotted line), and of compound (I-c) (curve with dashed line).

Figure 3 represents the absorption and emission spectra, normalized to molar absorption, of compound (I-c) (curve with plain line for absorption and curve with dashed line for emission), and of compound (I'-d) (curve with dotted line for absorption and curve with dashed and dotted line for emission).

Figure 4 represents the quantum yields (in %) of several organic fluorophores depending on the maximum emission peak wavelength (nm). Compounds (I-a), (I-b), (I-c) and (I'-d) are compared to conventional fluorophores commercialized under the brand name: Indocyanine green [solvent: biological serum, $\phi_f$ = 9%, $\lambda_{em}$ = 822 nm, approved by food and drug administration (FDA)], Methylene blue [solvent: biological serum, $\phi_f$ = 10%, $\lambda_{em}$ = 686 nm, approved by FDA], IRDye800CW [solvent: biological serum, $\phi_f$ = 12%, $\lambda_{em}$ = 789 nm, in phase I), and Cy7 [solvent: PBS buffer, $\phi_f$ = 28%, $\lambda_{em}$ = 774 nm, phase I).

Brightness (B) of the compounds can be measured by the following equation: B = $\varepsilon$ x $\phi_f$, $\varepsilon$ and $\phi_f$ being defined above.

Based on these results, it can be concluded that the compounds of the present invention are fluorescent and have good brightness values in the NIR range. Conventional compounds used in this range of values are cyanines bearing an extended polymethine scaffold such as Indocyanine green. However, they involve various non-radiative decays and exhibit inferior brightness values and inferior quantum yields.

## Claims

**1.** An $\alpha\beta$-fused BODIPY compound responding to the following formula (I) or (I'):

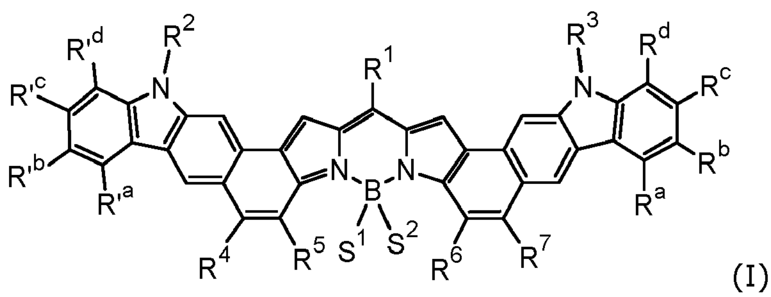

(I)

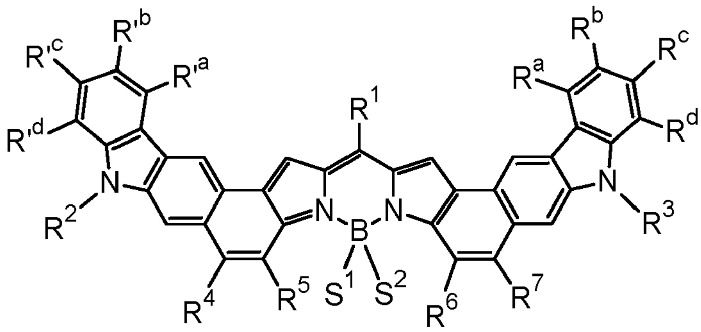

(I')

in which:

* $S^1$ and $S^2$, which may be identical or different, represent:

- a fluorine atom,
- a group with a formula (II): $-(L)_m-G$, where:

  • m is an integer equal to 0 or 1,
  • L is selected from an alkylene group optionally interrupted by one or more oxygen atoms, an alkynylene group optionally interrupted by one or more oxygen atoms, an arylene group, and an heteroarylene group, and
  • G is an hydrogen atom, an alkyl group, or a functional group,

- a group with a formula (III): $-C\equiv C-(L')_{m'}-A$, where:

• m' is an integer equal to 0 or 1,
• L' is selected from an alkylene group optionally interrupted by one or more oxygen atoms, an alkynylene group optionally interrupted by one or more oxygen atoms, an arylene group, and an heteroarylene group, and
• A is an hydrogen atom, an alkyl group, a chromophore group, or a functional group, or

- a group with a formula (IV): -O-L"-G, where:

• L" is selected from an alkylene group optionally interrupted by one or more oxygen atoms, or an arylene group, and
• G is as defined above,

* $R^1$ represents:

- a hydrogen atom,
- a group with a formula (V): $-(T)_u-D$, where:

• u is an integer equal to 0 or 1,
• T is selected from an alkylene group optionally interrupted by one or more oxygen atoms, an alkynylene group optionally interrupted by one or more oxygen atoms, an arylene group, and an heteroarylene group, and
• D is an hydrogen atom, an alkyl group, a functional group, a group of formula (VI) $-C\equiv C-(T')_{u'}-E$, or a group of formula (VII) -O-T"-D', where:

◦ u' is an integer equal to 0 or 1,
◦ T' is selected from an alkylene group optionally interrupted by one or more oxygen atoms, an alkynylene group optionally interrupted by one or more oxygen atoms, an arylene group, and an heteroarylene group, and
◦ E is an hydrogen atom, an alkyl group, a chromophore group, or a functional group,
◦ T" is selected from an alkylene group optionally interrupted by one or more oxygen atoms, or an arylene group, and
◦ D' an hydrogen atom, an alkyl group, or a functional group,

* $R^2$ and $R^3$, which may be identical or different, represent an alkyl group optionally interrupted by one or more oxygen atoms, or an alkoxy group,
* $R^a$, $R^b$, $R^c$, $R^d$, $R'^a$, $R'^b$, $R'^c$, and $R'^d$, which may be identical or different, represent a hydrogen atom, an alkyl group optionally interrupted by one or more oxygen atoms, or an alkoxy group,
* $R^4$ and $R^5$, taken together, form a five membered aromatic ring-based heteroaryl group selected from a thiophene ring, a thienothiophene ring, an oligothiophene group, a benzothiophene group, a furan ring, a benzofurane group, a pyrolle ring, and an indole group, and
* $R^6$ and $R^7$, taken together, form a five membered aromatic ring-based heteroaryl group selected from a thiophene ring, a thienothiophene ring, an oligothiophene group, a benzothiophene group, a furan ring, a benzofurane group, a pyrolle ring, and an indole group.

**2.** The compound according to claim 1, wherein the five membered aromatic ring-based heteroaryl group formed by taken together $R^4$ and $R^5$ is substituted with an alkyl group and the five membered aromatic ring-based heteroaryl group formed by taken together $R^6$ and $R^7$ is substituted with an alkyl group.

**3.** The compound according to claim 1 or claim 2, wherein $S^1$ and $S^2$ are fluorine atoms.

**4.** The compound according to any one of the preceding claims, wherein the alkylene group is a $C_1$-$C_{10}$ alkylene group, the alkynylene group is a $C_2$-$C_6$ alkynylene group, the arylene group is a $C_5$-$C_{20}$ arylene group, and the heteroarylene group is a $C_5$-$C_{20}$ heteroarylene group.

**5.** The compound according to any one of the preceding claims, wherein $R^1$ represents a group of formula (V) where u is an integer equal to 1, T is an arylene group, and D is an alkyl group or a functional group.

**6.** The compound according to any one of the preceding claims, wherein $R^2$ and $R^3$ are $C_1$-$C_{10}$ alkyl groups.

7. The compound according to any one of the preceding claims, wherein $R^a$, $R^b$, $R^c$, $R^d$, $R'^a$, $R'^b$, $R'^c$, and $R'^d$ are hydrogen atoms.

8. The compound according to any one of the preceding claims, wherein the five membered aromatic ring-based heteroaryl group formed by taken together $R^4$ and $R^6$ and the five membered aromatic ring-based heteroaryl group formed by taken together $R^5$ and $R^7$ are identical.

9. The compound according to any one of the preceding claims, wherein the five membered aromatic ring is a thiophene ring.

10. The compound according to any one of the preceding claims, wherein L is selected from an alkylene group optionally interrupted by one or more oxygen atoms, and an arylene group ; L' is selected from an alkylene group optionally interrupted by one or more oxygen atoms, and an arylene group ; and L" is an alkylene group.

11. The compound according to any one of the preceding claims, wherein T is selected from an alkylene group optionally interrupted by one or more oxygen atoms, and an arylene group ; T' is selected from an alkylene group optionally interrupted by one or more oxygen atoms, and an arylene group ; and T" is an alkylene group interrupted by one or more oxygen atoms.

12. The compound according to any one of the preceding claims, wherein said compound is selected from the following formulae (I-a) to (I-d):

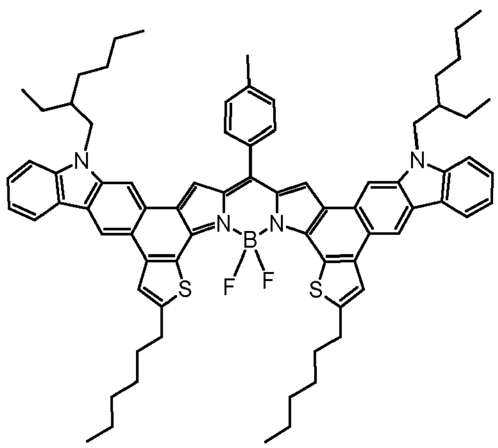

(I-a)

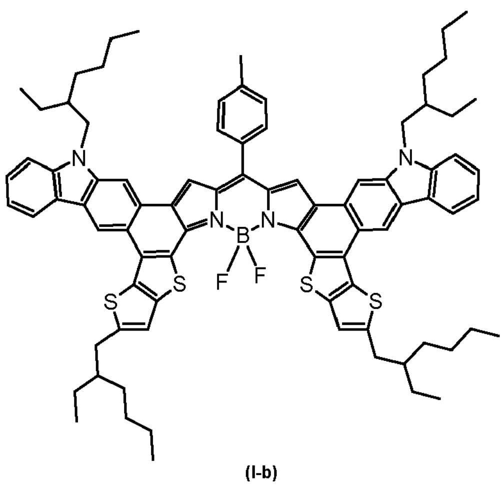

(I-b)

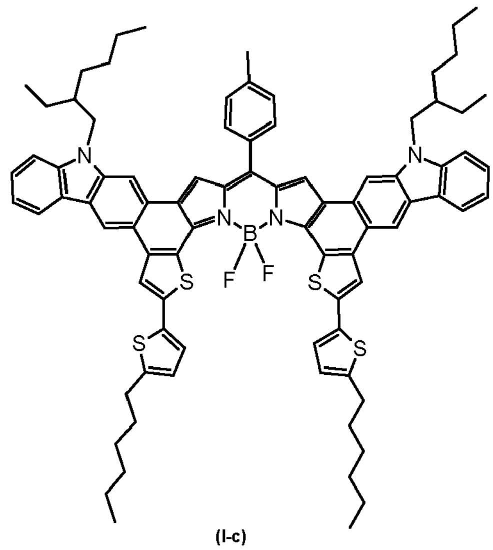

(I-c)

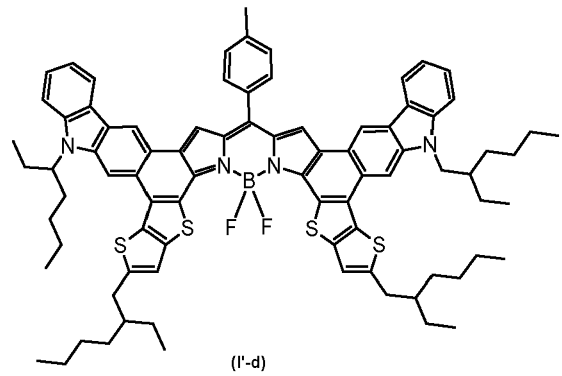

(I'-d)

.

**13.** A method for preparing a compound (I) or (I') as defined in any one of the preceding claims, wherein said method comprises at least the following steps:

i) the replacement of the bromine atoms in the 2 and 6 positions of the pyrrole sub-units of a compound of formula (VIII), with carbazole-based heteroaryl groups, so as to form a compound of formula (IX) or a compound of formula (IX') according to the following scheme 4:

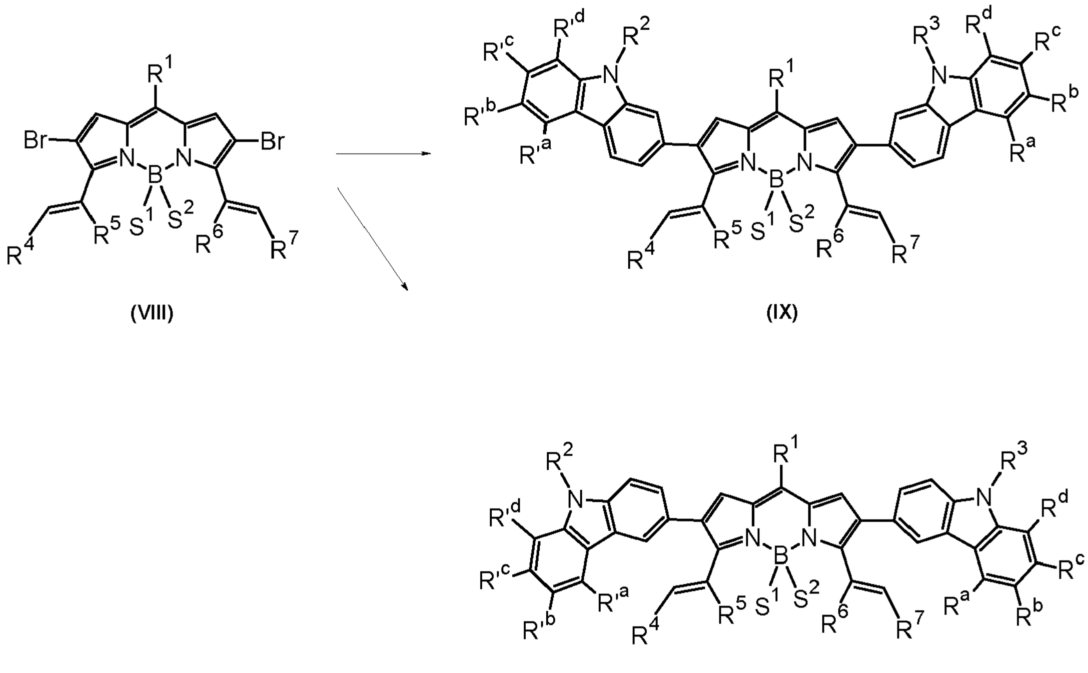

(VIII) (IX) (IX')

## SCHEME 4

where $R^1$, $R^2$, $R^3$, $R^4$, $R^5$, $R^6$, $R^7$, $R^a$, $R^b$, $R^c$, $R^d$, $R'^a$, $R'^b$, $R'^c$, and $R'^d$ are as defined in the preceding claims, and ii) the cyclization of compound of formula (IX) so as to form an αβ-fused scaffold corresponding to compound (I) or the cyclization of compound of formula (IX') so as to form an αβ-fused scaffold corresponding to compound (I') according to the following scheme 5:

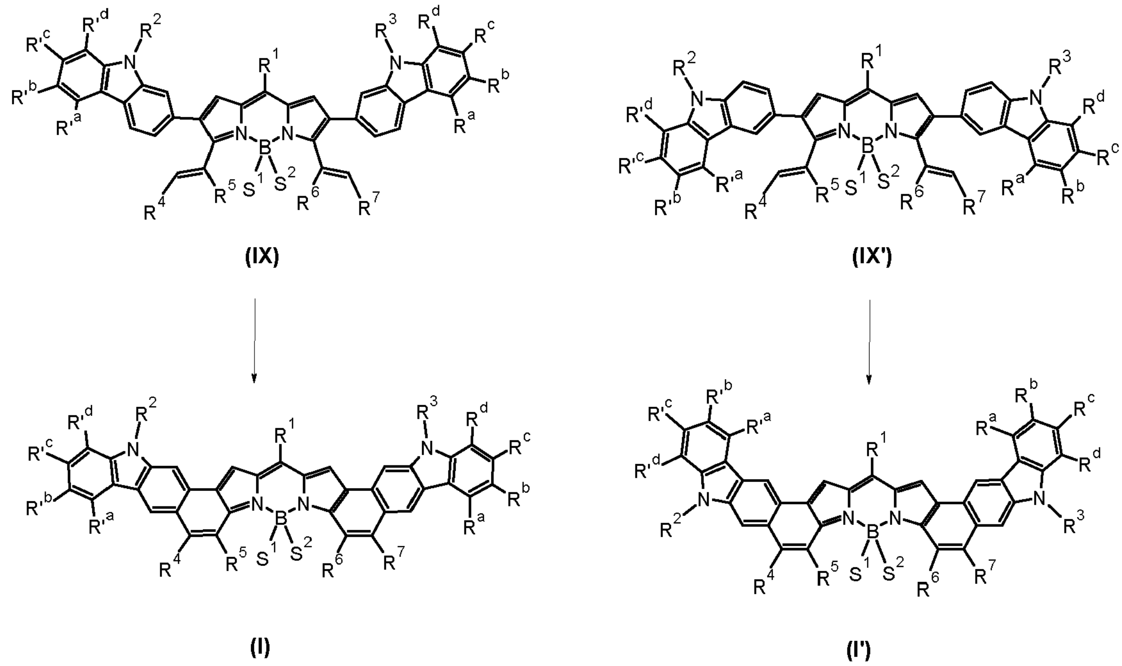

(IX) (IX') (I) (I')

## SCHEME 5.

**14.** The method according to claim 13, wherein step ii) is performed in the presence of $AgBF_4$.

**15.** Use of a compound (I) or (I') as defined in any one of claims 1 to 12, as a fluorescent dye, for example in the fields

of solar cells, re-emitting lasers, medical imaging, night vision devices, molecular photonic wires, security pigments, chemosensors, fluorescent switches, electron transfer reagents, electroluminescent or electrogenerated chemiluminescent agents, solar concentrators, fluorescence guided-surgery, and molecular probes.

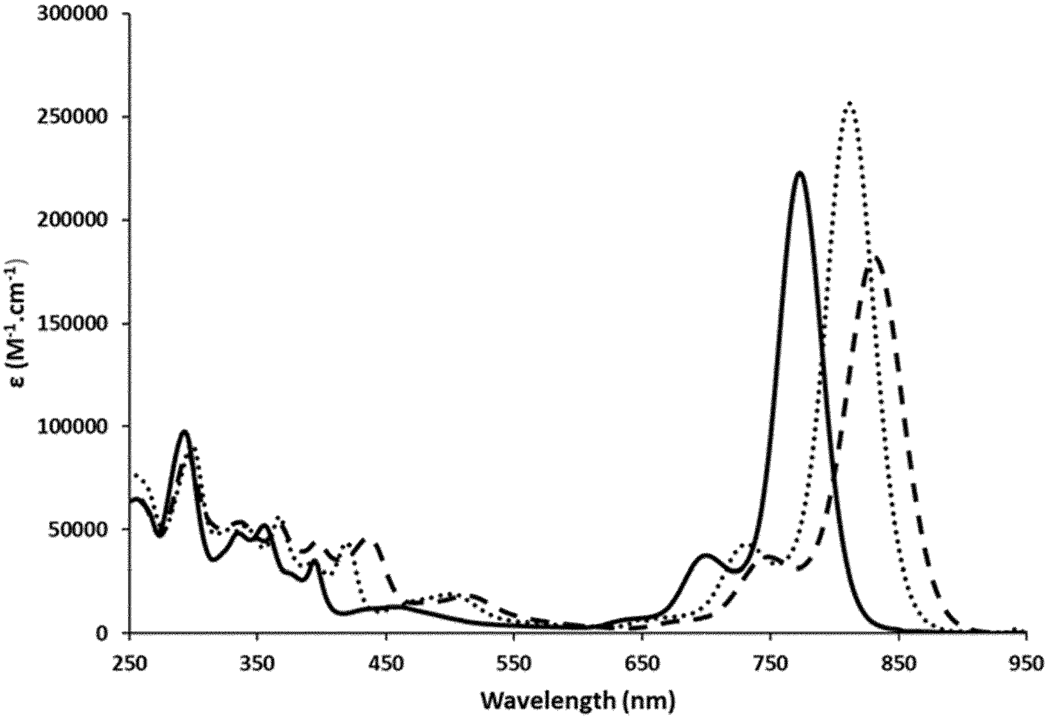
300000
250000
200000
150000
100000
50000
0
ε (M-1.cm-1)
250
350
450
550
650
750
850
950
Wavelength (nm)

FIG. 1

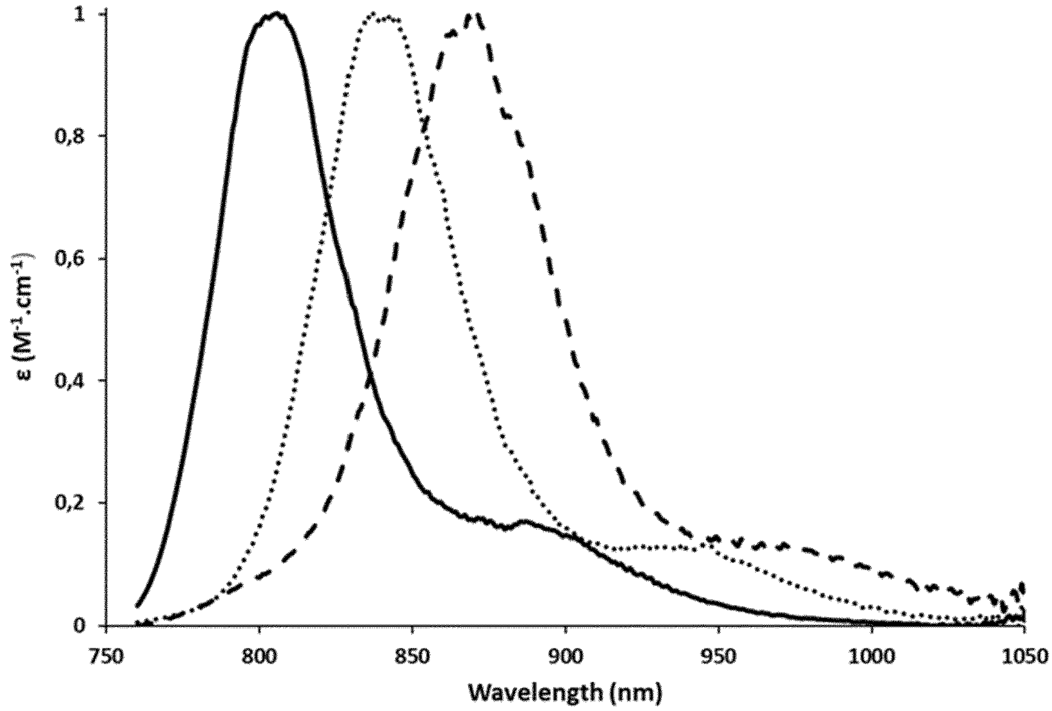
1
0,8
0,6
0,4
0,2
0
ε (M-1.cm-1)
750
800
850
900
950
1000
1050
Wavelength (nm)

FIG. 2

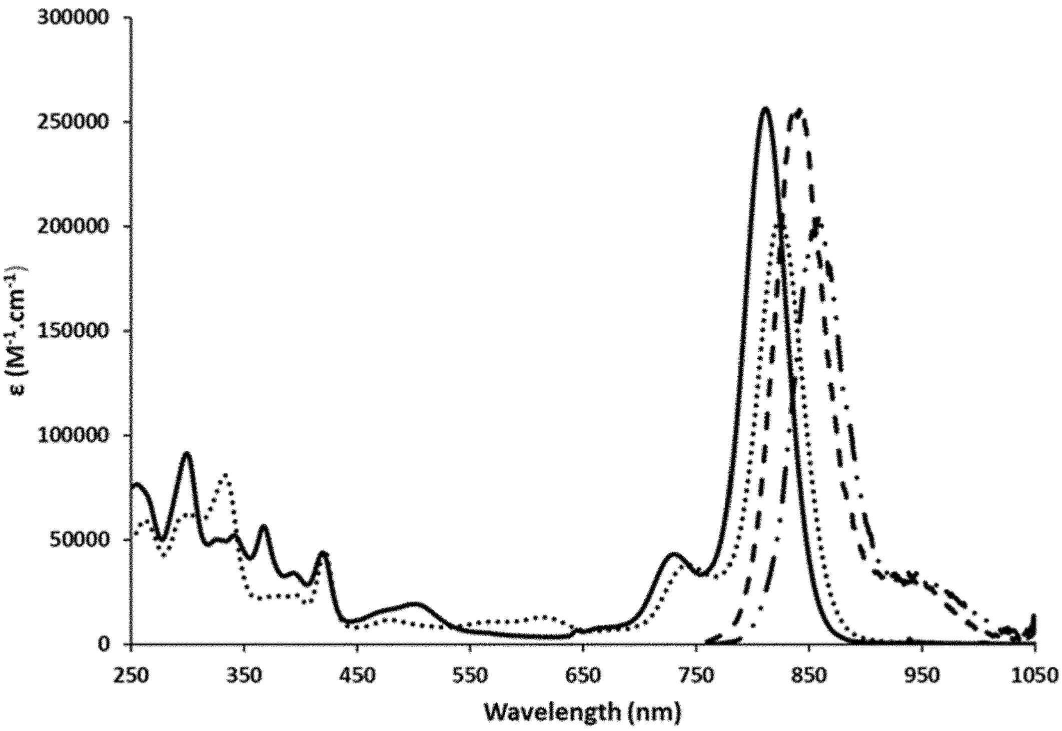

ε (M⁻¹.cm⁻¹)
300000
250000
200000
150000
100000
50000
0
250
350
450
550
650
750
850
950
1050
Wavelength (nm)


FIG. 3

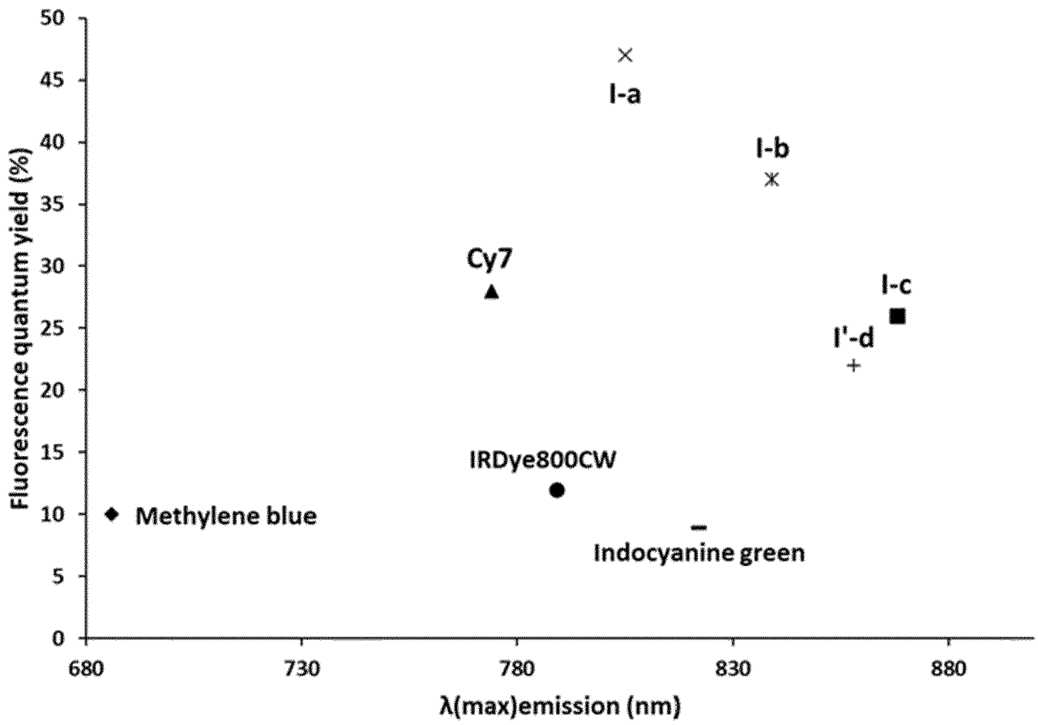

Fluorescence quantum yield (%)
50
45
40
35
30
25
20
15
10
5
0
680
730
780
830
880
λ(max)emission (nm)
I-a
I-b
Cy7
I-c
I'-d
IRDye800CW
Methylene blue
Indocyanine green


FIG. 4

Europäisches Patentamt
European Patent Office
Office européen des brevets

# EUROPEAN SEARCH REPORT

Application Number
EP 22 30 5009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SARMA TRIDIB ET AL: "Bis-naphthobipyrrolylmethene derived BODIPY complex: an intense near-infrared fluorescent dye", CHEMICAL COMMUNICATIONS, vol. 49, no. 84, 27 August 2013 (2013-08-27), page 9806, XP55931304, UK ISSN: 1359-7345, DOI: 10.1039/c3cc44834g * compound 9 scheme 1 page 9807 * ----- | 1-15 | INV. C07F5/02 C09B45/00 C09B47/00 C09K11/06 |

TECHNICAL FIELDS SEARCHED (IPC)

C07F
C09B
H05B
C09K

The present search report has been drawn up for all claims

1

| Place of search | Date of completion of the search | Examiner |
|---|---|---|
| The Hague | 14 June 2022 | Bourghida, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **AWUAH et al.** *Organic Letters,* 2011, vol. 13 (15), 3884-3887
- **HAYASHI et al.** *Organic Letters,* 2012, vol. 14 (3), 866-869
- **HUAULMÉ et al.** *Journal of Materials Chemistry C,* 2018, vol. 6, 9925-9931
- *J. Mater. Chem. C,* 2018, vol. 6, 9925-9931